(19) Europäisches Patentamt
European Patent Office
Office européen des brevets

(11) **EP 2 299 291 A1**

(12) **EUROPEAN PATENT APPLICATION**

(43) Date of publication:
23.03.2011 Bulletin 2011/12

(51) Int Cl.:
*G01S 13/10* (2006.01)  *G01S 13/18* (2006.01)
*G01S 13/58* (2006.01)  *G01S 13/93* (2006.01)

(21) Application number: **10163929.2**

(22) Date of filing: **25.07.2008**

(84) Designated Contracting States:
AT BE BG CH CY CZ DE DK EE ES FI FR GB GR
HR HU IE IS IT LI LT LU LV MC MT NL NO PL PT
RO SE SI SK TR

(30) Priority: **27.07.2007 JP 2007196683**

(62) Document number(s) of the earlier application(s) in accordance with Art. 76 EPC:
**08788931.7 / 2 188 647**

(71) Applicant: **Toyota Jidosha Kabushiki Kaisha**
**Toyota-shi, Aichi 471-8571 (JP)**

(72) Inventors:
• **Takahashi, Yoshihiko**
**Toyota-shi Aichi 471-8571 (JP)**

• **Kita, Yasushi**
**Toyota-shi Aichi 471-8571 (JP)**
• **Minami, Yoshiaki**
**Toyota-shi Aichi 471-8571 (JP)**
• **Ogawa, Masaru**
**Toyota-shi Aichi 471-8571 (JP)**

(74) Representative: **TBK-Patent**
**Bavariaring 4-6**
**80336 München (DE)**

Remarks:
This application was filed on 26-05-2010 as a divisional application to the application mentioned under INID code 62.

(54) **Pulse radar apparatus**

(57) A pulse radar apparatus, which includes transmitting means for transmitting a pulsed wave and receiving means for receiving a reflected wave of the transmitted wave transmitted by the transmitting means and calculates at least one of a relative distance and a relative speed with respect to an object based on a relationship between the wave transmitted by the transmitting means and the wave received by the receiving means, is provided with pulse width varying means for varying a pulse width of the wave transmitted by the transmitting means according to a position of a required detection range where calculation of the at least one of the relative distance and the relative speed with respect to the object is required.

FIG. 8

EP 2 299 291 A1

**Description**

FIELD OF THE INVENTION

The invention relates to a pulse radar apparatus. More specifically, the invention relates to a pulse radar apparatus suitable for detecting relative distance or relative speed with respect to an object by transmitting a pulsed wave and receiving a reflected wave generated by the transmitted wave reflecting off of the object.

BACKGROUND OF THE INVENTION

Japanese Patent Application Publication No. 2003-329764 (JP-A-2003-329764), for example, describes a pulse radar apparatus that determines whether there is an object by transmitting a pulsed wave and receiving a reflected wave generated by the transmitted wave reflecting off of an object, and if there is an object, calculates the relative distance or relative speed with respect to that object based on the relationship between the transmitted wave and the received wave.

Shortening the pulse width of the transmitted wave improves the detection accuracy with respect to the distance to the object but also makes it more difficult to detect the distance quickly at medium to long-range distances, such that when an attempt is made to detect the distance at medium to long-range distances, it takes a considerable amount of time. On the other hand, increasing the pulse width of the transmitted wave enables distances from medium-to-long range to be quickly detected with ease; but the accuracy with which those distances is detected decreases.

However, with the pulse radar apparatus described in JP-A-2003-329764, the pulse width of the transmitted wave is fixed and can not be changed according to the position of a detection range within which object detection is required. This makes it difficult for the pulse radar apparatus to both quickly and accurately detect an object in calculating the relative distance or relative speed with respect to the object.

DISCLOSURE OF THE INVENTION

This invention thus provides a pulse radar apparatus capable of both quickly and accurately detecting an object in calculating the relative distance or relative speed with respect to the object.

A first aspect of the invention relates to a pulse radar apparatus which includes transmitting means for transmitting a pulsed wave and receiving means for receiving a reflected wave of the wave transmitted by the transmitting means, and calculates at least one of a relative distance and a relative speed with respect to an object based on a relationship between the wave transmitted by the transmitting means and the wave received by the receiving means. This pulse radar apparatus is provided with pulse width varying means for varying a pulse width of the wave transmitted by the transmitting means according to a position of a required detection range where calculation of the at least one of the relative distance and the relative speed with respect to the object is required.

According to this structure, shortening the pulse width when a calculation for an object that is relatively close is required increases the resolution for detecting an object, thereby improving the detection accuracy of a relatively close object. Also, lengthening the pulse width when a calculation for an object that is relatively far away is required enables an object that is relatively far away to be detected quickly. Therefore, the invention enables both highly accurate detection of objects that are close and fast detection of objects that are far away in calculating the relative distance or the relative speed with respect to an object.

Incidentally, in the foregoing pulse radar apparatus, the pulse width varying means may shorten the pulse width the closer the position of the required detection range is, and lengthen the pulse width the farther away the position of the required detection range is.

Also, a second aspect of the invention relates to a pulse radar apparatus which includes transmitting means for transmitting a pulsed wave and receiving means for receiving a reflected wave of the wave transmitted by the transmitting means, and calculates at least one of a relative distance and a relative speed with respect to an object based on a relationship between the wave transmitted by the transmitting means and the wave received by the receiving means. This pulse radar apparatus is provided with object-including range bin detecting means for detecting an object-including range bin in which there is an object, from among a predetermined number of range bins into which a detection range where the at least one of the relative distance and the relative speed with respect to the object is to be calculated is divided; and pulse width shortening means for, when the object-including range bin is detected by the object-including range bin detecting means, shortening a pulse width of the wave transmitted by the transmitting means for the object-including range bin.

Shortening the pulse width of the transmitted pulse increases the resolution for detecting an object. As a result, the detection accuracy of an object in an object-including range bin can be improved compared with when the pulse width is longer, i.e., compared with the prior pulse width, while the pulse width before being shortened is relatively long so an object in all of the detection ranges, including those far away, can be detected quickly. Therefore, the invention enables highly accurate detection as well as fast detection of objects that are far away in calculating the relative distance or the relative speed with respect to an object.

Also, a third aspect of the invention relates to a pulse radar apparatus which includes transmitting means for transmitting a pulsed wave and receiving means for receiving a reflected wave of the wave transmitted by the transmitting means, and calculates at least one of a relative distance and a relative speed with respect to an object based on a relationship between the wave transmitted by the transmitting means and the wave received by the receiving means. This pulse radar apparatus is provided with object-including range bin detecting means for detecting an object-including range bin in which there is an object, from among a plurality of range bins into which a detection range where the at least one of the relative distance and the relative speed with respect to the object is to be calculated is divided; and calculation-requiring range bin limiting means for, when the object-including range bin is detected by the object-including range bin detecting means, limiting calculation-requiring range bins for which the at least one of the relative distance and the relative speed with respect to the object, from among all of the range bins within the detection range, is to be calculated to only the object-including range bin, a range bin around the object-including range bin, and a range bin on an edge of the detection range.

When an object-including range bin in which there is an object is detected from among a plurality of range bins into which a detection range where the at least one of the relative distance and the relative speed with respect to the object is to be calculated is divided; the calculation-requiring range bins for which the relative distance or the relative speed with respect to the object, from among all of the range bins within the detection range, is to be calculated are limited to only the object-including range bin, a range bin around the object-including range bin, and a range bin on an edge of the detection range. By limiting the calculation-requiring range bins, an object in the detection range can be detected quicker and the pulse width of the transmitted wave can be made shorter compared with when the calculation-requiring range bins are not limited. Therefore, the invention enables highly accurate detection as well as fast detection of objects that are far away in calculating the relative distance or the relative speed with respect to an objects.

Incidentally, with the foregoing pulse radar apparatus, the calculation-requiring range bin may be only the range bin on the edge of the detection range.

Moreover, a fourth aspect of the invention relates to a pulse radar apparatus which includes transmitting means for transmitting a pulsed wave and receiving means for receiving a reflected wave of the wave transmitted by the transmitting means, and calculates at least one of a relative distance and a relative speed with respect to an object based on a relationship between the wave transmitted by the transmitting means and the wave received by the receiving means. This pulse radar apparatus is provided with object-including range bin detecting means for detecting an object-including range bin in which there is an object, from among a plurality of range bins into which a detection range where at least one of a relative distance and a relative speed with respect to the object is to be calculated is divided; and integration frequency increasing means for, when the object-including range bin is detected by the object-including range bin detecting means, increasing the number of times that the received wave is integrated, in order to calculate the at least one of the relative distance and the relative speed with respect to the object for the object-including range bin. This pulse radar apparatus is effective for improving the signal-to-noise ratio and increasing the detection sensitivity.

When an object-including range bin in which there is an object is detected from among a plurality of range bins into which a detection range where the at least one of the relative distance and the relative speed with respect to the object is to be calculated is divided, the number of times the received wave is integrated for the object-including range bin is increased. Increasing the number of times the received wave is integrated improves the signal-to-noise ratio and increases the sensitivity in calculating the relative distance or relative speed with respect to an object. Therefore, this invention is able to improve the signal-to-noise ratio and increase the detection sensitivity in calculating the relative distance or relative speed with respect to the object.

Also, a fifth aspect of the invention relates to a method for calculating at least one of a relative distance and a relative speed with respect to an object. This method includes the steps of transmitting a pulsed wave; receiving a reflected wave of the transmitted wave; calculating the at least one of the relative distance and the relative speed with respect to the object based on a relationship between the transmitted wave and the received wave; and varying a pulse width of the transmitted wave according to a position of a required detection range where calculation of the at least one of the relative distance and the relative speed with respect to the object is required.

Also, a sixth aspect of the invention relates to a method for calculating at least one of a relative distance and a relative speed with respect to an object. This method includes the steps of transmitting a pulsed wave; receiving a reflected wave of the transmitted wave; calculating the at least one of the relative distance and the relative speed with respect to the object based on a relationship between the transmitted wave and the received wave; detecting an object-including range bin in which there is an object, from among a predetermined number of range bins into which a detection range where the at least one of the relative distance and the relative speed with respect to the object is to be calculated is divided; and shortening, when the object-including range bin is detected, a pulse width of the transmitted wave for the object-including range bin.

Also, a seventh aspect of the invention relates to a method for calculating at least one of a relative distance and a relative speed with respect to an object. This method includes the steps of transmitting a pulsed wave; receiving a reflected wave of the transmitted wave; calculating the at least one of the relative distance and the relative speed with respect to the object based on a relationship between the transmitted wave and the received wave; detecting an object-including range bin in which there is an object, from among a plurality of range bins into which a detection range where the at least one of the relative distance and the relative speed with respect to the object is to be calculated is divided; and limiting, when the object-including range bin is detected, calculation-requiring range bins for which the at least one of the relative distance and the relative speed with respect to the object, from among all of the range bins within the detection range, is to be calculated to only the object-including range bin, a range bin around the object-including range bin, and a range bin on an edge of the detection range.

Also, an eighth aspect of the invention relates to a method for calculating at least one of a relative distance and a relative speed with respect to an object. This method includes the steps of transmitting a pulsed wave; receiving a reflected wave of the transmitted wave; calculating the at least one of the relative distance and the relative speed with respect to the object based on a relationship between the transmitted wave and the received wave; detecting an object-including range bin in which there is an object, from among a plurality of range bins into which a detection range where the at least one of the relative distance and the relative speed with respect to the object is to be calculate is divided; and increasing, when the object-including range bin is detected, the number of times that the received wave is integrated, in order to calculate the at least one of the relative distance and the relative speed with respect to the object for the object-including range bin.

Accordingly, the invention enables highly accurate detection as well as fast detection of objects that are far away in calculating the relative distance or the relative speed with respect to an object.

BRIEF DESCRIPTION OF THE DRAWINGS

The foregoing and further objects, features and advantages of the invention will become apparent from the following description of exemplary embodiments with reference to the accompanying drawings, wherein like numerals are used to represent like elements and wherein:

FIG. 1 is a block diagram of a pulse radar apparatus according to a first example embodiment of the invention;

FIG. 2A is a diagram showing the mounting locations of transmitting and receiving antenna which are used as radar sensors provided in the pulse radar apparatus of this example embodiment, FIG. 2B is a diagram showing the detection range, and FIG. 2C is a diagram showing the pulse width of a transmitted wave;

FIGS 3A and 3B are views illustrating a method for detecting the distance from a moving vehicle equipped with the pulse radar apparatus to a target according to the example embodiment;

FIGS. 4A, 4B, and 4C are views illustrating a method for detecting the relative sped of a target with respect to the moving vehicle equipped with the pulse radar apparatus according to the example embodiment;

FIGS. 5A and 5B are views illustrating a method for detecting an angular position of a target with respect to the moving vehicle equipped with the pulse radar apparatus according to the example embodiment;

FIG. 6 is a graph showing an operation sequence of the pulse radar apparatus according to the example embodiment;

FIG. 7 is a flowchart illustrating an example of a control routine executed in the pulse radar apparatus according to the example embodiment;

FIG. 8 is a diagram showing a characteristic operation of the pulse radar apparatus according to the example embodiment;

FIGS. 9A to 9C are diagrams showing a characteristic operation of the pulse radar apparatus according to the example embodiment;

FIG. 10 is a flowchart illustrating an example of a control routine executed in a pulse radar apparatus according to a second example embodiment of the invention;

FIG. 11 is a diagram showing a characteristic operation of the pulse radar apparatus according to the second example embodiment;

FIG. 12 is a flowchart illustrating an example of a control routine executed in a pulse radar apparatus according to a third example embodiment of the invention;

FIG. 13 is a diagram showing a characteristic operation of the pulse radar apparatus according to the third example embodiment;

FIG. 14 is a flowchart illustrating an example of a control routine executed in a pulse radar apparatus according to a fourth example embodiment of the invention;

FIG. 15 is a diagram showing a characteristic operation of the pulse radar apparatus according to the example embodiment;

FIG. 16 is a block diagram of a pulse radar apparatus according to a modified example of the first example embodiment; and

FIG. 17 is a block diagram of a pulse radar apparatus according to another modified example of the first example embodiment.

## DETAILED DESCRIPTION OF THE EMBODIMENTS

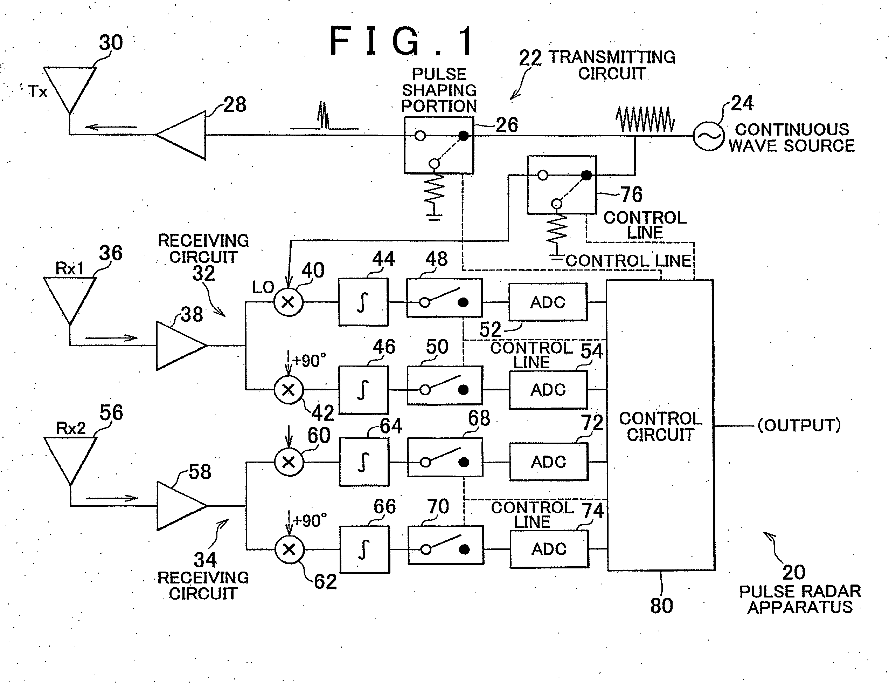

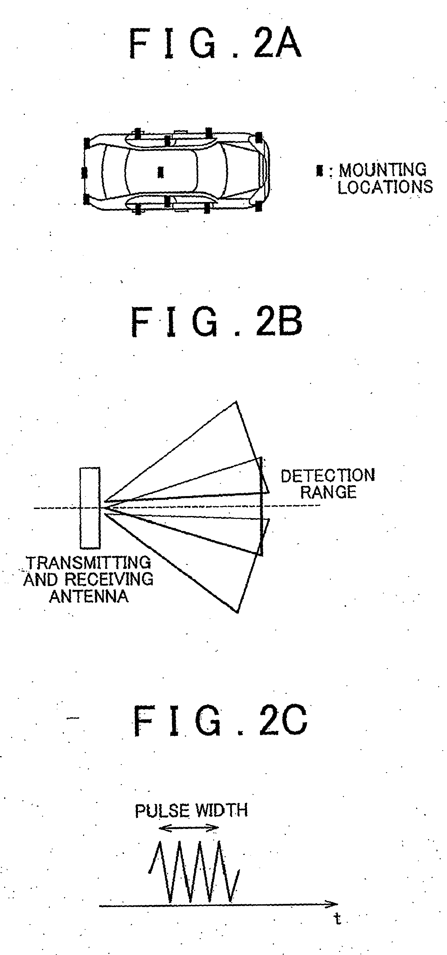

FIG. 1 is a block diagram of a pulse radar apparatus 20 according to a first example embodiment of the invention. Also, FIG. 2A is a diagram showing the mounting locations of transmitting and receiving antenna which are used as radar sensors provided in the pulse radar apparatus 20 of this example embodiment, FIG. 2B is a diagram showing the detection range, and FIG. 2C is a diagram showing the pulse width of a transmitted wave.

The pulse radar apparatus 20 in this example embodiment is mounted on a moving body such as a vehicle (hereinafter simply referred to as "the vehicle"), and detects an object (i.e., a target) near the vehicle by transmitting a pulsed wave toward a predetermined detection area in front or in back of the vehicle and receiving a reflected wave generated by the transmitted wave bouncing or reflecting off of the object. Incidentally, the vehicle equipped with this pulse radar apparatus 20 is not limited to a land vehicle that travels on land, such as an automobile, but may also be an air vehicle such as an aircraft that travels in the air.

As shown in FIG. 1, the pulse radar apparatus 20 includes a transmitting circuit 22 which has a continuous wave source 24, a pulse shaping portion 26, an amplifier 28, and a transmitting antenna 30.

The continuous wave source 24 generates a continuous stream of high-frequency signals. The pulse shaping portion 26 has a switch that switches between allowing the signals generated by the continuous wave source 24 to be transmitted and interrupting those signals. By turning this switch on and off, a pulse signal in which a pulse having a predetermined pulse width has been modulated is repeatedly generated at predetermined cycles. The amplifier 28 amplifies the pulse signal generated by the pulse shaping portion 26. Also, the transmitting antenna 30 (Tx) emits the pulse signal that has been amplified by the amplifier 28 as a transmitted wave outside the vehicle.

This pulse signal is emitted from the transmitting antenna 30 mainly in the direction in which the vehicle is traveling such that a predetermined detection area is created in that direction (FIG. 2B). Also, the pulse signal may be emitted in a relatively marrow beam that scans over the entire detection area, or a plurality of transmitting antennas 30 each aimed so that they emit pulse signals in different directions may be provided to increase the detection area.

Incidentally, when the maximum distance from the vehicle at which target detection is performed is designated Dmax and the speed of light is designated c, the transmission cycle (pulse recurrence frequency) T of the pulse signal from the transmitting circuit 22 is set such that $T > 2 \times$ Dmax / c. Also, the pulse width (shown in FIG. 2C) W of the pulse signal from the transmitting circuit 22 corresponds to the minimum separable distance (distance resolution: range bin) as the distance to the target. When that smallest distance is designated A and the speed of light is designated c, then $W = 2 \times A / c$.

The pulse radar apparatus 20 also includes two receiving circuits 32 and 34 having substantially the same characteristics. The receiving circuit 32 includes a receiving antenna 36 (Rx1), an amplifier 38, two mixers 40 and 42, two integration circuits 44 and 46, two switches 48 and 50, and two AD converting portions 52 and 54. Similarly, the receiving circuit 34 also includes a receiving antenna 56 (Rx2), an amplifier 58, two mixers 60 and 62, two integration circuits 64 and 66, two switches 68 and 70, and two AD converting portions 72 and 74. The two receiving antennas 36 and 56 are arranged separated from each other by a predetermined distance d in the horizontal direction of the vehicle (such as the vehicle width direction in the case of an automobile).

Incidentally, when the vehicle is an automobile, the transmitting antenna 30 and the two receiving antennas 36 and 56 are arranged on front, side, and rear portions, upper or lower portions, such as the bumpers, headlights, taillights, pillars, mirrors, and doors, etc., as shown in FIG. 2A.

The receiving antennas 36 and 56 each receive pulsed reflected waves which are the pulsed waves transmitted from the transmitting antenna 30 that have reflected or bounced off of an object. The pulse received by the receiving antenna 36 is first amplified by the amplifier 38 and then sent to both mixers 40 and 42. Similarly, the pulse received by the receiving antenna 56 is first amplified by the amplifier 58 and then sent to the mixers 60 and 62.

In addition to the amplifier 38, the continuous wave source 24 is also connected to the inputs of the mixers 40 and 42 via a switch 76. Similarly, in addition to the amplifier 58, the continuous wave source 24 is also connected to the inputs of the mixers 60 and 62 via the switch 76. The switch 76 is a switch that is turned on a predetermined period of time after the switch of the pulse shaping portion 26 is turned on, i.e., a predetermined period of time after a pulse is transmitted from the transmitting antenna 30 of the transmitting circuit 22.

The output of the amplifier 38 (i.e., the received pulse) is input to the mixers 40 and 42, as is a local pulse which is input after a delay of a predetermined period of time after the pulse is transmitted. The phase of the local pulse that is input to the mixer 42 is offset (i,e., delayed) by +90° from the local pulse that is input to the mixer 40. Similarly, the output of the amplifier 58 (i.e., the received pulse) is input to the mixers 60 and 62, as is a local pulse which is input after a delay of a predetermined period of time after the pulse is transmitted. The phase of the local pulse that is input to the mixer 62 is offset (i.e., delayed) by +90° from the local pulse that is input to the mixer 60.

Incidentally, the local pulse is repeatedly generated while appropriately changing the delay time with respect to the transmission of the transmitted pulse. Also, this delay time is changed for each of a plurality of (such as 100) range bins into which the maximum distance Dmax (detection range) from the vehicle at which target detection is performed is divided. The mixers 40, 42, 60, and 62 each mix the received pulse and the local pulse, and then output the mixed pulse.

The integration circuit 44 is connected to the mixer 40, the integration circuit 46 is connected to the mixer 42, the integration circuit 64 is connected to the mixer 60, and the integration circuit 66 is connected to the mixer 62. The integration circuits 44, 46, 64, and 66 integrate the outputs of the mixers 40, 42, 60, and 62, respectively. More specifically, the integration circuits 44, 46, 64, and 66 integrate the mixer outputs for a predetermined number (such as 10) of transmissions of transmitted pulses for each pulse recurrence frequency T.

The AD converting portion 52 is connected to the integrating portion 44 via the switch 48, the AD converting portion 54 is connected to the integrating portions 46 via the switch 50, the AD converting portion 72 is connected to the integrating portion 64 via the switch 68, and the AD converting portion 74 is connected to the integrating portion 66 via the switch 70. The AD converting portions 52, 54, 72, and 74 convert the output of the integration circuits 44, 46, 64, 66 into digital signals when the switches 48, 50, 68 and 70, respectively, turn on.

The pulse radar apparatus 20 also includes a control circuit 80 which is connected via control lines to the pulse shaping portion 26, as well as the switches 48, 50, 68, 70, and 76. The control circuit 80 controls the switch of the pulse shaping portion 26 such that a transmitted pulse having a predetermined pulse width W is emitted outside the vehicle from the transmitting antenna 30 at a predetermined pulse recurrence frequency T. The control circuit 80 also controls the switch 76 such that a local pulse is generate and input to the mixers 40, 42, 60, and 62 a predetermined period of time after the transmitted pulse is emitted from the transmitting antenna 30.

The control circuit 80 is also connected to the AD converting portions 52, 54, 72, and 74. The digital outputs from the AD converting portions 52, 54, 72, and 74 are supplied to the control circuit 80 The control circuit 80 detects the distance from the vehicle to the target, the relative speed of the target with respect to the vehicle, and the angular position of the target with respect to the vehicle, as will be described in detail later, based on the digital output values of the AD converting portions 52, 54, 72, and 74 when the switches 48, 50, 68, and 70 are turned on. The target detections results are then output to another device.

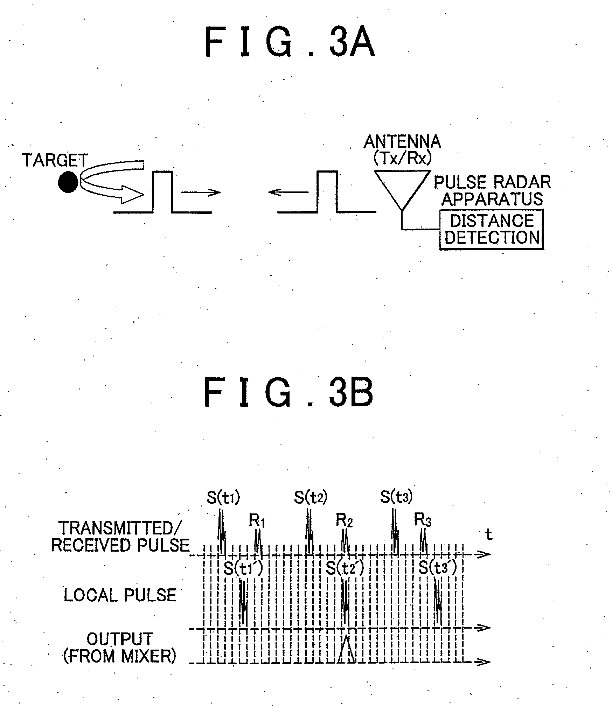

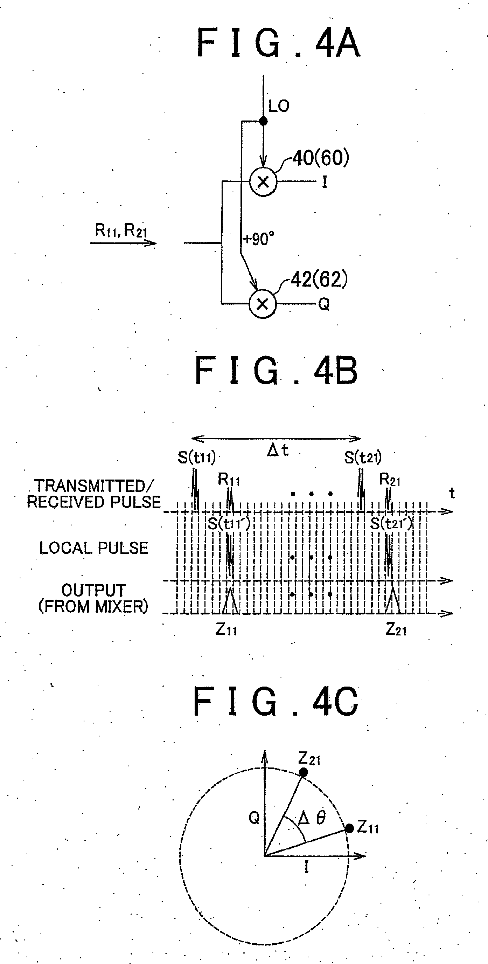

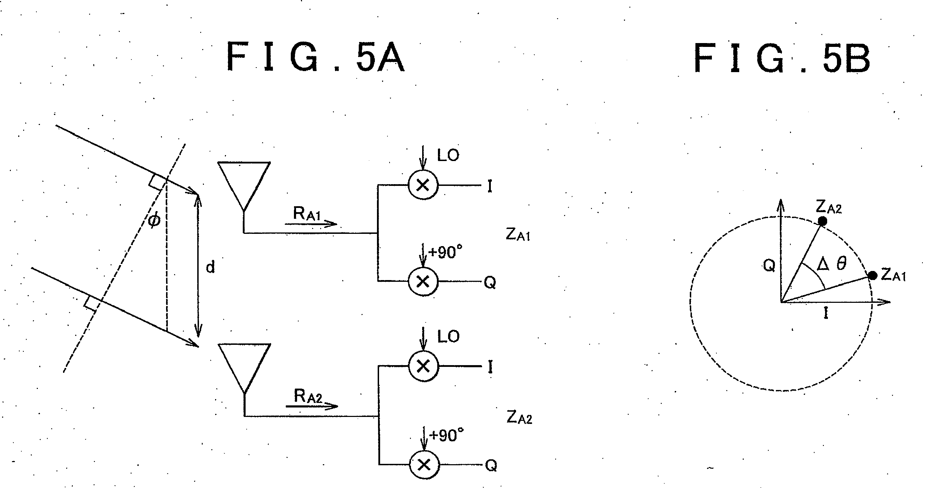

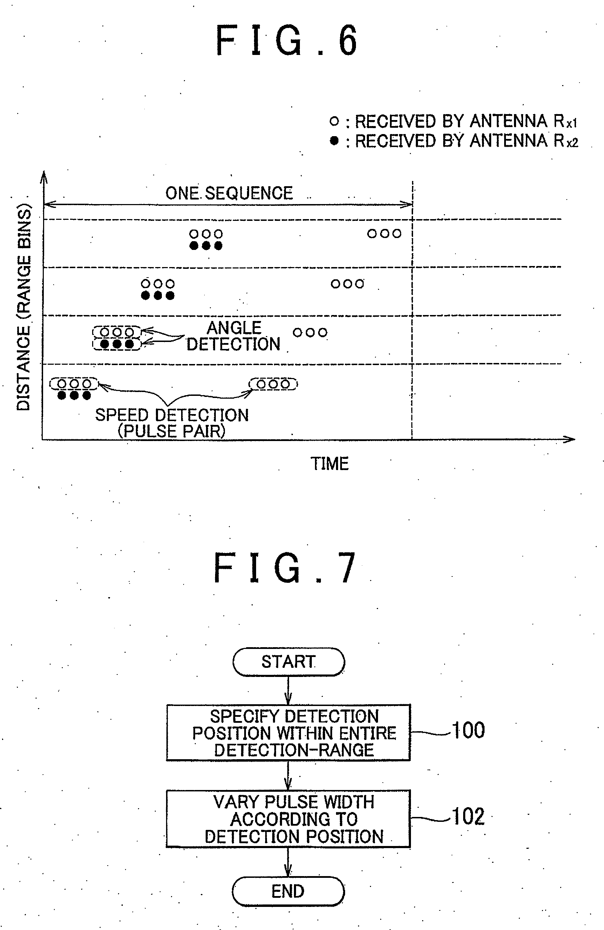

Next, the basic operation of the pulse radar apparatus 20 of this example embodiment will be described with reference to FIGS. 3A to 6. FIGS. 3A and 3B are views illustrating a method for detecting the distance from the vehicle to a target according to the example embodiment. FIGS. 4A to 4C are views illustrating a method for detecting the relative speed of a target with respect to the vehicle according to the example embodiment. FIGS. 5A and 5B are views illustrating a method for detecting an angular position of a target with respect to the vehicle according to the example embodiment, and FIC. 6 is a graph showing an operation sequence of the pulse radar apparatus 20 according to the example embodiment. Incidentally, in the example shown in FIG. 6, there are four range bins in the detection range and the pulse is continuously received three times.

In this example embodiment, while the vehicle equipped with the pulse radar apparatus 20 is operating, the continuous wave source 24 of the pulse radar apparatus 20 generates a continuous wave. The control circuit 80 controls the switch of the pulse shaping portion 26 so that a transmitted pulse is emitted outside the vehicle at a predetermined pulse recurrence frequency T from the transmitting antenna 30 while the continuous wave is being generated by the continuous wave source 24. In this case, the transmitted pulse is emitted outside the vehicle at the predetermined pulse recurrence frequency T from the transmitted antenna 30.

If a target is not within the detection range of the maximum distance Dmax, the transmitted pulse emitted from the transmitting antenna 30 is not reflected so in this case a reflected wave of the transmitted pulse is not received by the receiving antennas 36 and 56. On the other hand, if a target is within the detection range, the transmitted pulse emitted from the transmitting antenna 30 reflects off of the target and the reflected wave of that transmitted pulse is received by the receiving antennas 36 and 56. When a reflected wave of the transmitted pulse is received by the receiving antennas 36 and 56, it is first amplified by the amplifiers 38 and 58 and then supplied to the mixers 40, 42, 60, and 62.

The control circuits 80 controls the switch 76 such that a local pulse to be supplied to the mixers 40, 42, 60, and 62 is generated after a predetermined time delay each time a transmitted pulse is emitted from the transmitting antenna 30. In this case, the local pulse is supplied to the mixers 40, 42, 60, and 62 after a delay of a predetermined period of time after the transmitted pulse is emitted from the transmitting antenna 30.

Incidentally, the control circuit 80 changes the predetermined delay time, i.e., the time delay between the time the pulse signal is emitted from the transmitting antenna 30 and the time the local pulse is generated, for each of the plurality of (e.g., 100) range bins into which the detection range is divided, according to a predetermined sequence (e.g., in order from the range bin closest to the vehicle to the range bin farthest away from the vehicie). More specifically, the predetermined time delay is shortened the closer the range bin in the detection range is to the vehicle, and lengthened the farther away the range bin is from the vehicle. Accordingly, the delay time of the local pulse supplied to the mixers 40, 42, 60, and 62 with respect to the time at which the transmitted pulse is emitted changes according to the range bin (i.e., the position thereof) targeted for detection (hereinafter simply referred to as the "detection range bin") at each point in time within the detection range.

Incidentally, the detection range bin within the detection range is limited to one while the transmitted pulse is continuously emitted a predetermined number of times (such as 10 times), and the delay time during this period is a constant value. Each time after the transmitted pulse is continuously emitted that predetermined number of times, the delay time is changed to a different value and the detection range bin is switched to the next range bin.

The mixers 40, 42, 60, and 62 each mix the received pulse from the receiving antennas 36 and 56 with the local pulse from the transmitting circuit 22 side. If there is no target in the detection range bin, then no correlation can be made between the received pulse and the local pulse at that time so the mixer outputs are substantially zero. On the other hand, if there is a target in the detection range bin, a correlation can be made between the received pulse and the local pulse at that time so the mixer outputs are high values.

The mixer outputs when detection is continuously performed in the same range bin a predetermined number of times are all integrated in the integration circuits 44, 46, 64, and 66, and the resultant integrated values are converted to digital signal in the AD converting portions 52, 54, 72, and 74, after which they are supplied to the control circuit 80.

Each time after a local pulse is generated for each range bin in the detection range, the control circuit 80 determines whether the digital outputs supplied by the AD converting portions 52, 54, 72, and 74 have reached a predetermined threshold value thereafter. If it is determined that the digital outputs from the AD converting portions 52, 54, 72, and 74 have not reached the predetermined threshold value, then it is determine that no correlation can be made between the received pulse and a local pulse so it is determined that there is no target in the detection range bin corresponding to the delay time of that local pulse. If, on the other hand, it is determined that the digital outputs have reached the predetermined threshold, then it is determined that a correlation can be made between the received pulse and a local pulse so the delay time of the local pulse having that correlation is identified and it is determined that there is a target in the detection range bin corresponding to that delay time.

In this way, the pulse radar apparatus 20 according to this example embodiment can determine whether there is a target in each range bin in the detection range based on a correlation between the received pulse and a local pulse, and can detect the relative distance from the vehicle to the target by identifying the position of the range bin having a target based on the time (reflection time) between transmission of the transmitted pulse and reception of the received pulse.

Also in this example embodiment, the control circuit 80 detects the relative speed between the vehicle and the target in the detection range using a pulse-pair method, whereby two pulses transmitted at intervals are reflected from the same distance and the phase difference between the received signals (= the received pulses) is detected. The relative speed is detected for each range bin in the detection range.

More specifically, as shown in FIGS. 4A to 4C, when a single transmitted pulse S reflects off of a target and is received by the receiving antenna 36 (or 56) as a received pulse R, an I channel signal I and a Q channel signal Q are output from the mixers 40 and 42 (or 60 and 62) that form an IQ detector. At this time, if the received pulse R is designated $a \times \sin(2\pi f \times t + \theta)$ (where f is the transmit frequency) and the local pulse is designated $\sin(2\pi f \times t)$, the output I of the mixer 40 is $a \times \cos\theta$, and the output Q of the mixer 42 is $a \times \sin\theta$. The control circuit 80 calculates a phase signal Z (= I + Q) based on the output I of the mixer 40 and the output Q of the mixer 42 (or the output I of the mixer 60 and the output Q of the mixer 62).

If two transmitted pulses S (t11) and S(t21) transmitted at intervals $\Delta t$ are each reflected off of a target and received as received pulses R11 and R21 by the receiving antennas 36 and 56 when the target is moving at a relative speed Vr, the phase signals Z11 and Z21 for those received pulses change by a phase difference $\Delta\theta$ of twice the distance that the target moved during the time interval At over which the two transmitted pulse S (t11) and S (t21) are transmitted.

The control circuit 80 detects the phase difference $\Delta\theta$ between the obtained phase signals Z for the transmission of the two pulses transmitted at intervals At for each range bin in the detection range. For the range bin in which there is a target, the relative speed Vr of that target is detected according to the relational expression shown in (1) below based on the detected phase difference $\Delta\theta$.

$$Vr = \Delta\theta \times \lambda / (4\pi\Delta t) \text{ (where } \lambda \text{ is the transmitted wavelength)} \dots (1)$$

In this way, the pulse radar apparatus 20 of this example embodiment can detect the relative speed Vr of a target with respect to the vehicle by detecting the phase difference $\Delta\theta$ between received pulses (= phase signals Z from the IQ detector) for the transmission of the two pulses transmitted at intervals $\Delta t$.

Moreover, in this example embodiment, the control circuit 80 detects the angular position of a target with respect to the vehicle using a phase-comparison monopulse method, whereby the phase difference between signals (= received pulses) received by two receiving antennas arranged in different positions for a single transmitted pulse is detected. The angular position is detected for each range bin in the detection range.

More specifically, as shown in FIGS. 5A and 5B, when a single transmitted pulse S reflects off of a target and a received pulse $R_{At}$ is received by the receiving antenna 36 and a received pulse $R_{A2}$ is received by the receiving antenna 56, an I channel signal $I_{A1}$ and a Q channel signal $Q_{A1}$ that are based on the received pulse $R_{A1}$ from the mixers 40 and 42 that form the IQ detector are output, and an I channel signal $I_{A2}$ and a Q channel signal $Q_{A2}$ that are based on the received pulse $R_{A2}$ from the mixers 60 and 62 that form a IQ detector are output. The control circuit 80 then calculates a phase signal $Z_{A1}$ (= $I_{A1}$ + $Q_{A1}$) based on the output $I_{A1}$ from the mixer 40 and the output $Q_{A1}$ from the mixer 42, as well as calculates a phase signal $Z_{A2}$ (= $I_{A2}$ + $Q_{A2}$) based on the output $I_{A2}$ from the mixer 60 and the output $Q_{A2}$ from the mixer 62.

If the target with respect to the vehicle is in a position offset by an angle $\phi$ with respect to the front direction of the pulse radar apparatus 20 (i.e., is orthogonal to a straight line that connects the two receiving antennas 36 and 56), the phase signals $Z_{A1}$. and $Z_{A2}$, which are based on the received pulses $R_{A1}$ and $R_{A2}$ received by the two receiving antennas 36 and 56 that are separated by a predetermined distance d, change by the phase difference $\Delta\theta$ corresponding to the distance d between the antennas.

The control circuit 80 detects the phase difference $\Delta\theta$ between the phase signals Z based on the pulses received by the two receiving antennas 36 and 56, for the transmission of a single transmitted pulse. For the range bin having a target, the angular position $\phi$ of that target is detected according to the relational expression shown in (2) below based on that detected phase difference $\Delta\theta$.

$$\phi = \sin^{-1}(\Delta\theta \times \lambda / (2\pi d)) \ldots (2)$$

In this way, for a range bin having a target in the detection range, the pulse radar apparatus 20 of this example embodiment can detect the angular position $\phi$ of that target with respect to the vehicle by detecting the phase difference $\Delta\theta$ between received pulses (= phase signals Z from the IQ detector) received by the two receiving antennas 36 and 56 that are separated by the distance d, for the transmission of a single transmitted pulse.

In the pulse radar apparatus 20 of this example embodiment, the control circuit 80 detects the distance to the target, the relative speed Vr of the target, and the angular position $\phi$ of the target by the methods described above.

More specifically, as shown in FIC. 6, it is determined whether there is a a target starting from the closest range bin in the detection range, and if there is, the distance to that target is detected. Also, for each detection range bin, the angular position of the target is detected by detecting the phase difference between the pulses received by the two receiving antennas 36 and 56. In this case, for a range bin having a target, not only the relative distance of that target, but also the relative angular position of that target can be detected.

Once distance and angular position detection have been performed to the farthest range bin in the detection range, they are then performed again starting from the closest range bin in the detection range. At this time, the relative speed of the target is then detected by detecting the phase difference $\Delta\theta$ between the received pulses for the last transmission of two pulses and the current transmission of two pulses transmitted at intervals for the same range bin. In this case, for a range bin having a target, not only the relative distance and relative angular position of that target, but also the relative speed of that target can be detected.

In this example embodiment, the pulse width W of the transmitted pulse, which is a transmitted wave emitted outside the vehicle from the transmitting circuit 22, corresponds to the minimum separable distance (distance resolution) A as the distance to the target (W = 2 $\times$ A / c). Therefore, the distance resolution A can be effectively increased (i.e., the minimum separable distance can be effectively shortened) by shortening the pulse width W. However, although a short pulse width W enables the target detection accuracy to be improved, keeping this pulse width W short at the same value over the entire detection range would make it difficult to make detections quickly at medium to long distances due to the increased processing load, and as a result, it would take a significant amount of time to detect a target throughout the entire detection range.

Therefore, by appropriately changing the pulse width W of the transmitted pulse from the transmitting circuit 22, the pulse radar apparatus 20 of this example embodiment is able to both detect targets at medium to long distances quickly and detect targets at short distances with great accuracy. Hereinafter, a characteristic portion of this example embodiment will be described with reference to FIGS. 7 to 9C.

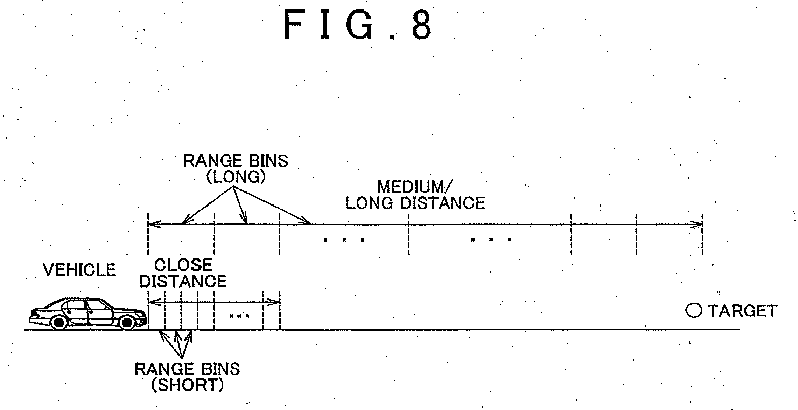

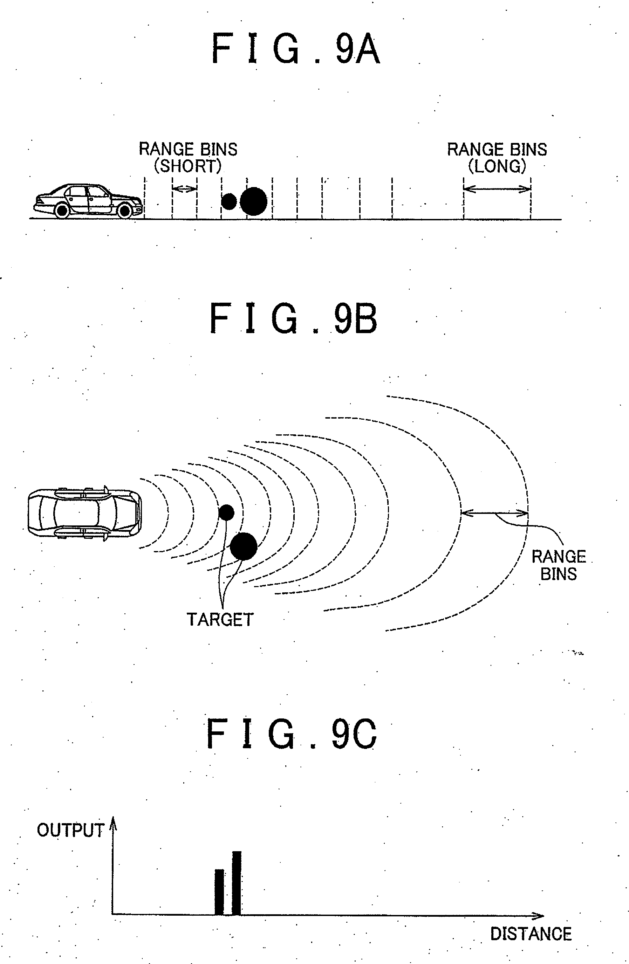

FIC. 7 is a flowchart illustrating one example of a control routine executed by the control circuit 80 in the pulse radar apparatus 20 of this example embodiment. Also, FIGS. 8 to 9C are each diagrams showing a characteristic operation of the pulse radar apparatus 20 according to the example embodiment. Incidentally; FIG. 8 is a diagram comparing short distance range bins and medium-to-long distance range bins, as viewed from the side of the vehicle. Also, FIGS. 9A and 9B are diagrams showing the length of the range bins at each distance from the vehicle, as viewed from the side of the vehicle and above the vehicle, respectively.

In the pulse radar apparatus 20 of this example embodiment, the control circuit 80 controls the switch of the pulse shaping portion 26 so that a transmitted pulse is emitted outside the vehicle at a predetermined pulse recurrence frequency T from the transmitting antenna 30 while a continuous wave is being generated by the continuous wave source 24, as described above. The control circuit 80 switches the pulse shaping portion 26 so that the pulse width W becomes a predetermined value each time a single transmitted pulse is emitted outside the vehicle.

More specifically, the position of detection where the transmitted pulse is actually about to be emitted outside the vehicle and the reflected wave thereof is about to be received (i.e., where an attempt is being made to detect a target), within the entire detection range from the vehicle up to the maximum distance Dmax is specified (step 100).

For example, if the entire detection range is divided into three detection positions (e.g., a short distance from the vehicle to 10 meters from the vehicle, a medium distance from 10 meters to 50 meters, and a long distance from 50 meters to 150 meters),: whether the detection position is a short distance, a medium distance, or a long distance from the vehicle is specified. Incidentally, when target detection in the detection range is performed from closest to farthest with respect to the vehicle as time passes, the detection position changes in that predetermined order.

Then, when the detection position where the transmitted pulse is actually about to be emitted outside the vehicle and that reflected wave received is specified in step 100, the pulse width W of the transmitted pulse about to actually be emitted outside the vehicle is varied according to that detection position (step 102). More specifically, when the detection position is close to the vehicle, the pulse width W is made relatively short, and when the detection position is far away from the vehicle, the pulse width W is made relatively long.

For example, when the detection position is a short distance away, the pulse width W of the transmitted pulse is set relatively short at W1. When the detection position is a medium distance away, the pulse width W of the transmitted pulse is set to W2 which is longer than W1, and when the detection position is a long distance away, the pulse width W of the transmitted pulse is set to W3 which is even longer than W2.

Incidentally, the control circuit 80 may store the relationship between the detection position and the pulse width W in memory beforehand, and set the pulse width W according to the detection position by reading that relationship as appropriate. When the pulse width W of the transmitted pulse is set as described above, the control circuit 80 controls the pulse shaping portion 26 to realize that pulse width W.

According to this routine by the control circuit 80, the pulse width W of the transmitted pulse from the transmitting circuit 22 can be made relatively short when the detection position where target detection is to be performed within the entire detection range is close to the vehicle, and made relatively long when the detection position where target detection is to be performed within the entire detection range is far away from the vehicle.

As the pulse width W of the transmitted pulse becomes shorter, the length of each detection range bin in the detection range becomes shorter and the distance resolution for detecting a target increases. Therefore, according to the structure of this example embodiment, a target can be detected with increasingly higher resolution the closer the detection position where target detection is to be performed within the entire detection range is to the vehicle, thus enabling the detection accuracy of a target in that position to be improved (see FIGS. 8 and 9A to 9C).

On the other hand, as the pulse width W of the transmitted pulse becomes longer, the length of each detection range bin in the entire detection range increases so there are fewer range bins in the entire detection range. As a result, it takes less time to detect a target in the entire detection range. Therefore, according to the structure of this example embodiment, a target can be detected with a wider range bin the farther away the detection position where target detection is to be performed within the entire detection range is from the vehicle. Accordingly, a target in that position can be detected quickly (see FIGS. 8 and 9A to 9C).

With the pulse radar apparatus 20 of this example embodiment, highly accurate detection at short distances and quick detection at long distances are both possible in detecting the relative distance, relative speed, and the relative angle of a target in the entire detection range. Also, these can both be realized using common transmitting and receiving antennas so there is no need to provide separate transmitting and receiving antennas for short distances and long distances.

Incidentally, in the first example embodiment described above, the transmitting circuit 22 may be regarded as transmitting means of the invention, the receiving circuits 32 and 34 may be regarded as receiving means of the invention, and the detection position where a transmitted pulse is actually about to be emitted outside the vehicle and that reflected wave received, in the entire detection range up to the maximum distance Dmax, may be regarded as the position of the required detection range. Also, pulse width varying means of the invention is realized by the control circuit 80 varying the pulse width W of the transmitted pulse that is actually about to be emitted outside the vehicle, according to the detection position where a target detection is about to be performed within the entire detection range.

In the first example embodiment described above, the entire detection range to the maximum distance Dmax of a target to be detected is divided into three detection positions in steps, for example, but it may also be divided into detection positions linearly.

Also, in the first example embodiment described above, the pulse width of the transmitted pulse is varied according to the detection position for detecting a target within the entire detection range, in the process of changing that detection position in a preset order. However, the timing at which the pulse width is varied is not limited to this. For example, when the vehicle is traveling at a slow speed (such as 10 km/h or less), it is necessary to detect a target close to the vehicle, i.e., the detection position is a position relatively close to the vehicle, so the pulse width of the transmitted pulse may be made comparatively short. Also, when the vehicle is traveling at a high speed (such as 40 km/h or more), it is necessary to detect a target relatively far away from the vehicle, i.e., the detection position is a position relatively far away from the vehicle, so the pulse width of the transmitted pulse may be made relatively long.

Incidentally, the pulse width only needs to be varied when target detection is required by a switch operation performed by an occupant of the vehicle, for example. The pulse width may also be varied separately depending on whether target detection is required during low speed running or high speed running.

In this kind of modified example, a target close to the vehicle when the vehicle is traveling at a low speed can be detected with high resolution, which enables the detection accuracy of that target to be improved. Also, a target far away from the vehicle when the vehicle is traveling at a high speed can be detected over a wider range bin, which enables that target to be detected faster.

Also, as described above, when the pulse is made shorter during low speed running, the maximum distance Dmax itself of a target to be detected may be made comparatively shorter, thus making the entire detection range comparatively narrow, and when the pulse width is made longer during high speed running, the maximum distance Dmax itself may be made comparatively longer, thus making the entire detection range comparatively wider. Moreover, the pulse width according to the running speed of the vehicle is not limited to being varied between a pulse width for low speed running and a pulse width for high speed running as described above, but may also be varied progressively according to the vehicle speed.

According to the first example embodiment described above, the pulse width of the transmitted pulse is varied according the detection position where target detection is to be performed each time in the entire detection range, regardless of whether there is a target in the detection range from the vehicle up to the maximum distance Dmax.

In contrast, in a second example embodiment of the invention, if there is a target in one of the range bins set in the detection range, the pulse width of the transmitted pulse is made shorter for that range bin (i.e., the range bin having the target in it), and the length (the distance resolution) of each range bin is made shorter (finer), thus increasing the target detection accuracy.

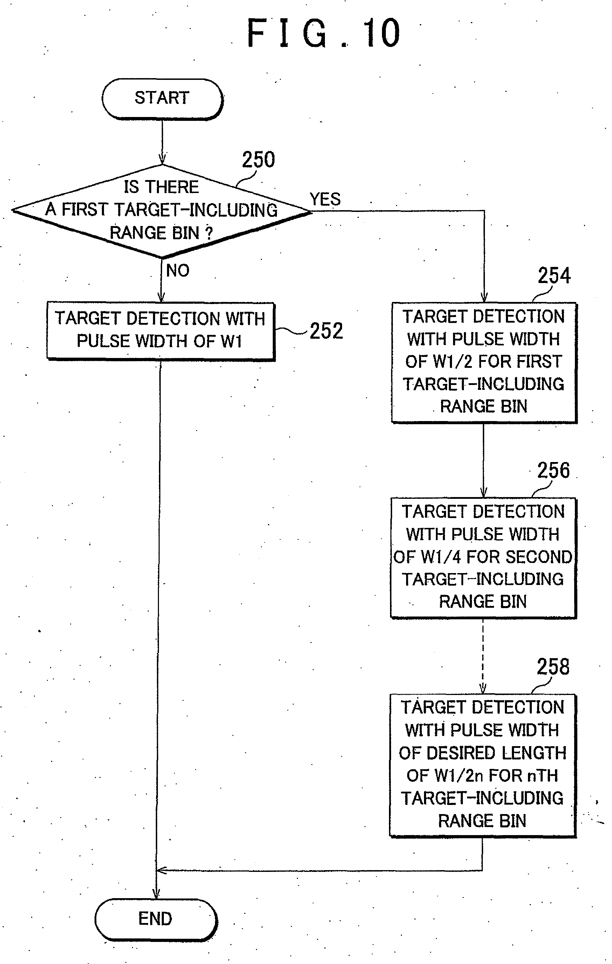

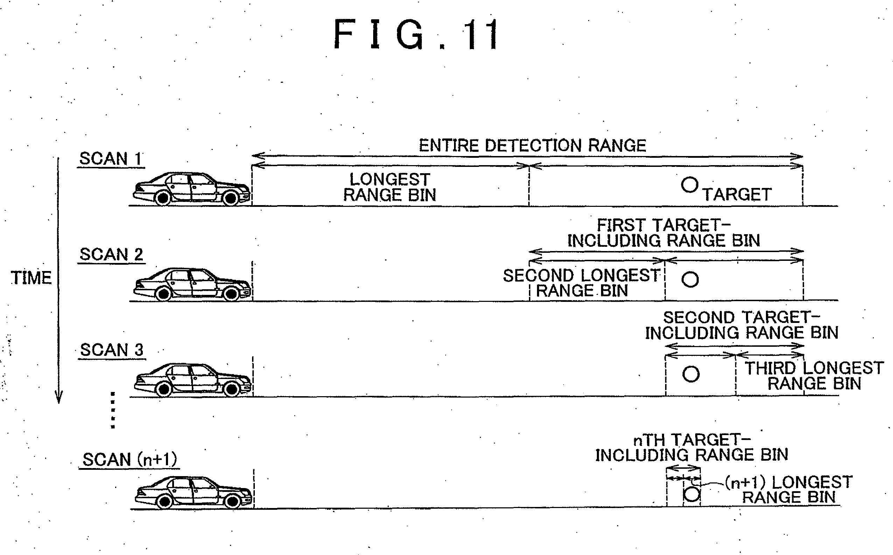

A pulse radar apparatus of this example embodiment is realized by having the control circuit 80 in the structure of the pulse radar apparatus 20 shown in FIG. 1 execute the routine shown in FIG. 10. Hereinafter, the characteristic portion of this example embodiment will be described with reference to FIGS.10 and 11. FIG. 10 is a flowchart illustrating one example of a control routine executed by the control circuit 80 in the pulse radar apparatus of this example embodiment. Also, FIG. 11 is a diagram showing a characteristic operation of the pulse radar apparatus according to this example embodiment.

With the pulse radar apparatus of this example embodiment, when the control first starts, the control circuit 80 first divides the entire detection range, from the vehicle to the maximum distance Dmax of a target to be detected, into a preset number (i.e., one or more; the example in FIG 11 shows two) of range bins (hereinafter these range bins will be referred to as the "longest range bins"). Then, the control circuit 80 determines whether there is a target based on the digital output from the AD converting portions 52, 54, 72, and 74 for each longest range bin in the detection range by generating a local pulse corresponding to the position of each longest range bin while controlling the switch of the pulse shaping portion 26 such that a transmitted pulse having a pulse width W1 (= initial value) corresponding to the lengths of those longest range bins is emitted outside the vehicle (target detection: scan 1 in FIG. 11). If there is a target, the control circuit 80 then detects the range bin with the target (hereinafter this range bin will be referred to as "first target-including range bin"), from among the predetermined number of longest range bins into which the entire detection range is divided (step 250).

If it is determined that there is no target in any of the longest range bins such that a first target-including range bin is not detected, the control circuit 80 keeps the pulse width W of the transmitted pulse at the initial value W1 and again performs target detection as described above (step 252).

If, on the other hand, it is determined that there is a target in one of the longest range bins such that a first target-including range bin is detected, the pulse width W of the transmitted pulse is reduced to half of the initial value W1 (i.e., reduced to W1/2) while the detection range is reduced from the entire detection range to only the first target-including range, after which target detection is performed again (step 254; scan 2 in FIG. 11). More specifically, it is determined whether there is a target based on the digital output from the AD converting portions 52, 54, 72, and 74 for each second longest range bin, which is half the length of the first target-including range bin, in the range of the first target-including range bin. This determination is made by generating a local pulse corresponding to the position of each second longest range bin while controlling the switch of the control of the pulse shaping portion 26 such that a transmitted pulse having a pulse width W1/2 corresponding to the length of the second longest range bin is emitted outside the vehicle in only the range of the first target-including range bin. If there is a target, the range bin having the target is then detected from among the two second longest range bins that make up the first target-including range bin (hereinafter, this range bin will be referred to as the "second target-including range bin"). In this case, target detection continues in the second longest range bins that are within the first target-including range bin.

When a second target-including range bin is detected as a result of performing target detection in each second longest range bin in the range of the first target-including range bin, the control circuit 80 then reduces the pulse width W of the transmitted pulse to W1/4 while targeting only the range of the second target-including range bin detected in the range of the first target-including range bin (step 256; scan 3 in FIG. 11). Then the control circuit 80 divides the second target-including range bin in two (each of which will hereinafter be referred to as a "third longest range bin") and detects which of those two third longest range bins contains the target. The third longest range bin containing the target will hereinafter be referred to as the third target-including range bin. In this case, target detection continues in the third longest range bins that are within the second target-including range bin.

When a third target-including range bin is detected, the control circuit 80 further reduces the pulse width W of the transmitted pulse (i.e., shortens the length of each range bin) while narrowing the target detection range within the entire detection range, and performs target detection again in a similar manner as described above. This is continued until ultimately the pulse width W of the transmitted pulse is a desired length W1/2n (where n is a natural number of 1 or more), i.e., until a (n + 1) target-including range bin having a target is detected from (n + 1) longest range bins of a desired length, and target detection is performed again.

According to the routine executed by the control circuit 80, at the start of the control, target detection is performed throughout the entire detection range, from the vehicle to the maximum distance Dmax. On the other hand, the pulse width W of the transmitted pulse is relatively long so the number of range bins for which calculations are performed in the entire detection range can be reduced. Accordingly, target detection in the entire detection range can be performed quickly in a short period of time.

On the other hand, if a first target-including range bin is detected from among the plurality of the longest range bins into which the entire detection range is divided, then the target detection that follows is only performed in the range of that first target-including range bin within the entire detection range and the pulse width W of the transmitted pulse is reduced by half. Then, target detection thereafter is performed in the same manner, with the range targeted for detection within the entire detection range being narrowed and the pulse width W of the transmitted pulse becoming shorter until it reaches the desired length.

When the pulse width W of the transmitted pulse is shortened, the distance resolution for detecting the target increases. Therefore, in this example embodiment, the detection accuracy for a target in a target-including range bin can be improved. Incidentally, even if the pulse width W of the transmitted pulse is not shortened in this way, the range targeted for detection within the entire detection range is narrowed which makes it possible to avoid an increase in the number of range bins for which calculations are performed within the entire detection range. As a result, it is possible to inhibit the time that it takes to detect a target from becoming considerably long.

Therefore, with the pulse radar apparatus of this example embodiment, highly accurate detection as well as fast detection at long distances are possible in detecting the relative distance, the relative speed, and the relative angle of a target in the entire detection range. In particular, the detection time for detecting a target can effectively be shortened even when the maximum distance Dmax of a target to be detected is long and the entire detection range is wide or high distance resolution is required.

Incidentally, in the second example embodiment described above, target-including range bin detecting means of the invention is realized by the control circuit 80 detecting the first target-including range bin to the nth target-including range bin, and pulse width shortening means is realized by, when a k (k =1 to n) target-including range bin is detected, the control circuit 80 halving the last pulse width W of the transmitted pulse for that k target-including range bin (= W1/2k).

In the second example embodiment described above, when a target-including range bin is detected, target detection is performed only in the range of the detected target-including range bin instead of the entire detection range and after having reduced the last pulse width W of the transmitted pulse by half (i.e., using a transmitted pulse having a pulse width W that is half of the last pulse width W). Alternatively, however, target detection may be performed throughout the entire detection range but changing the pulse width W of the transmitted pulse according to the range bin. More specifically, target detection may be performed while maintaining the same pulse width W as the last pulse width W of the transmitted pulse for the range of range bins other than the detected target-including range bin, while halving the pulse width W of the transmitted pulse only in the range of the target-including range bin.

Also, when a target-including range bin is detected, the last pulse width W of the transmitted pulse is reduced by half (i.e., the target-including range bin is divided in two). Alternatively, however, the last pulse width W of the transmitted pulse may be reduced by a third or a fourth (i.e., the target-including range bin may be divided into thirds or fourths).

Furthermore, in the second example embodiment described above, when a target-including range bin is detected, target detection is then performed only in the range of the detected target-including range bin instead of the entire detection range and after having reduced the last pulse width W of the transmitted pulse by half. However, when target detection with the desired length of pulse width W has ended, the pulse width W may be returned to the initial value W1 and target detection repeated

In the second example embodiment described above, at the start of the control, target detection is performed throughout the entire detection range and the pulse width W of the transmitted pulse is set to a long value beforehand in order to achieve highly accurate detection as well as detection in a short period of time. Then if a target-including range bin is detected, the pulse width W of the transmitted pulse is shortened to a desired length while narrowing the detection range in a step-like manner, after which target detection is performed again.

In contrast, in a third example embodiment of the invention, from the start of control, the pulse width W of the transmitted pulse is first set to the desired length and then the detection range is limited to an area within the entire detection range.

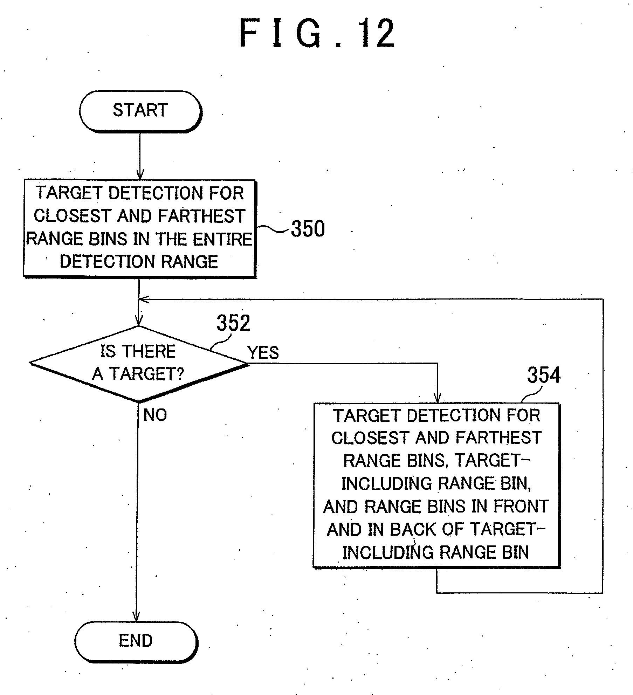

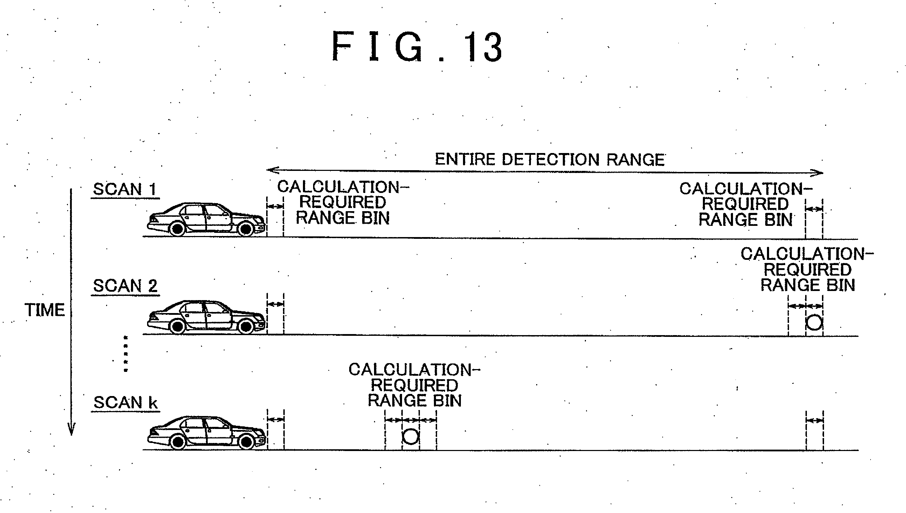

A pulse radar apparatus of this example embodiment is realized by the control circuit 80 in the structure of the pulse radar apparatus 20 shown in FIG. 1 executing the routine shown in FIG. 12. Hereinafter, a characteristic portion of this example embodiment will be described with reference to FIGS.12 and 13. FIG. 12 is a flowchart illustrating an example of a control routine executed by the control circuit 80 in the pulse radar apparatus according to this example embodiment, and FIG. 13 is a diagram showing a characteristic operation of the pulse radar apparatus according to the

example embodiment.

With the pulse radar apparatus of this example embodiment, at the start of control, the control circuit 80 first divides the entire detection range, from the vehicle to the maximum distance Dmax, into a predetermined number of range bins of a desired length. Then, the control circuit 80 performs target detection to determine whether there is a target based on the digital output from the AD converting portions 52, 54, 72, and 74 for the range bin on the back edge and the range bin on the front edge (also referred to as the closest and farthest range bins in this specification) from among all of the range bins in the entire detection range, by performing controlling the switch of the pulse shaping portion 26 such that a transmitted pulse having a pulse width W corresponding to the range bins of the desired length is emitted from the vehicle, while generating local pulses corresponding to only the closest and farthest range bins (step 350; scan 1 in FIG. 13). Then the closest range bin (i.e., the range bin closest to the vehicle) and the farthest range bin (i.e., the range bin farthest away from the vehicle) are set as calculation-requiring range bins for which target detection is to be performed, and target detection is performed from these calculation-requiring range bins.

If no target is detected in either of the set calculation-requiring range bins (i.e., if the determination in step 352 is no), the closest and the farthest range bins are again set as the calculation-requiring range bins and target detection is performed again.

If, on the other hand, a target is detected in one of the set calculation-requiring range bins (i.e., if the determination in step 352 is yes), then target detection is performed in each of the closest and farthest range bins, the target-including range bin, and one or more range bins adjacent to, in front and in back of, the target-including range bin, from among all of the range bins of the entire detection range, by generating local pulses corresponding to those range bins (step 354; scan 2 to scan k in FIG. 13). Then those range bins, i.e., the closet and farthest range bins, the target-including range bin; and the range bins adjacent to, both in front and in back of, the target-including range bin, are set as the calculation-requiring range bins for which target detection is to be performed, and target detection is performed in these calculation-requiring range bins. Then the calculation-requiring range bins are appropriately changed according to the detection results and target detection is continued.

According to this routine executed by the control circuit 80, from the start of the control, the number of range bins into which the entire detection range, from the vehicle to the maximum distance Dmax, is increased and their distance is shortened, i.e., the pulse width W of the transmitted pulse is set relatively short so that the desired distance resolution can be obtained. Therefore, the distance resolution for detecting the target can be increased which enables the target detection accuracy to be improved.

Also, after limiting the calculation-requiring range bins for which target detection is to be performed, from among all of the range bins in the entire detection range, to only the closest and farthest range bins at the start of the control and a target is detected, the calculation-requiring range bins can then be limited to the closest and farthest range bins, the target-including range bin, and the range bins in front and in back of that target-including range bin. Therefore, compared with a structure in which all of the range bins in the entire detection range are designated as calculation-requiring range biris, the number of range bins for which calculations are to be performed within the entire detection range is reduced, thus enabling target detection within the entire detection range to be performed quickly in a short period of time.

Incidentally, a target will not skip over the closest and farthest range bins of the detection range and suddenly appear near the center so even if the calculation-requiring range bins are limited to only the closest and farthest range bins at the start of the control, as described above, it is possible to reliably prevent a target that is actually in the detection range from becoming lost during target detection. Also, even if the calculation-requiring range bins are limited to the closest and farthest range bin, the target-including range bin, and the range bins around that target-including range bin after a target-including range bin is detected, as described above, it is possible to reliably prevent a target that is actually in the detection range or a target that has just entered the detection range from becoming lost during target detection.

Therefore, with the pulse radar apparatus of this example embodiment, highly accurate detection as well as fast detection at long distances are possible in detecting the relative distance, the relative speed, and the relative angle of a target in the entire detection range. In particular, the detection time for detecting a target can effectively be shortened even when the maximum distance Dmax of a target to be detected is long and the entire detection range is wide or high distance resolution is required.

Incidentally, in the third example embodiment described above, target-including range bin detecting means of the invention is realized by the control circuit 80 detecting a target-including range bin from among all of the range bins in the entire detection range. Also, calculation-requiring range bin limiting means of the invention is realized by the control circuit 80 limiting, after a target-including range bin is detected, the calculation-required range bins for which target detection is to be performed to the closest and farthest range bins in the detection range, the target-including range bin, and the range bins in front and in back of that target-including range bin, from among all of the range bins in the entire detection range.

In the third example embodiment described above, at the start of the control, the calculation-requiring range bins for which target detection is to be performed, from among all of the range bins in the entire detection range, is limited to only the closest and farthest range bins in the detection range. Alternatively, however, at the start of the control, target detection may be performed in not only the calculation-requiring range bins but in all of the range bins.

Also in the third example embodiment described above, after a target-including range bin is detected, the calculation-requiring range bins are limited to the closest and farthest range bins in the detection range, that target-including range bin, and one or more range bins adjacent to, both in front and in back of, that target-including range bin. However, the positions of those range bins added as calculation-requiring range bins may also be changed according to the relative speed of that target at the time the target-containing range bin is detected. For example, when a target is approaching the vehicle, the detected target-including range bin and at least one range bin (the number depending on the relative speed, or more specifically, the number increasing as the relative speed increases) which is adjacent to, in back of (i.e., on the side closer to the vehicle), that target-including range bin are set as the calculation-required range bins. Also, when a target is moving farther away from the vehicle, the detected target-including range bin and at least one range bin (the number depending on the relative speed, or more specifically, the number increasing as the relative speed increases) which is adjacent to, in front of (i.e., on the side farther away from the vehicle), that target-including range bin are set as the calculation-requiring range bins. This modified example makes it possible to reliably prevent a target that is actually in the detection range from getting lost during target detection regardless of the relative speed.

In the first, second, and third example embodiments described above, the pulse width of the transmitted pulse is varied or the calculation-requiring range bins for which target detection is to be performed in the entire detection range are limited to only a portion of the total range bins in the entire detection range. In contrast, in a fourth example embodiment of the invention, when a target is detected in one of the range bins of the detection range, the number of times that the pulse is integrated in the target-including range bin is increased to improve the signal-to-noise ratio in detecting a target.

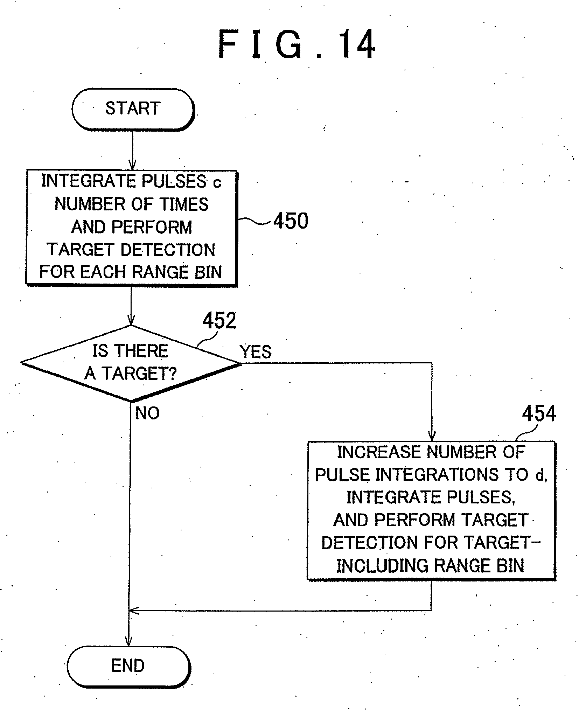

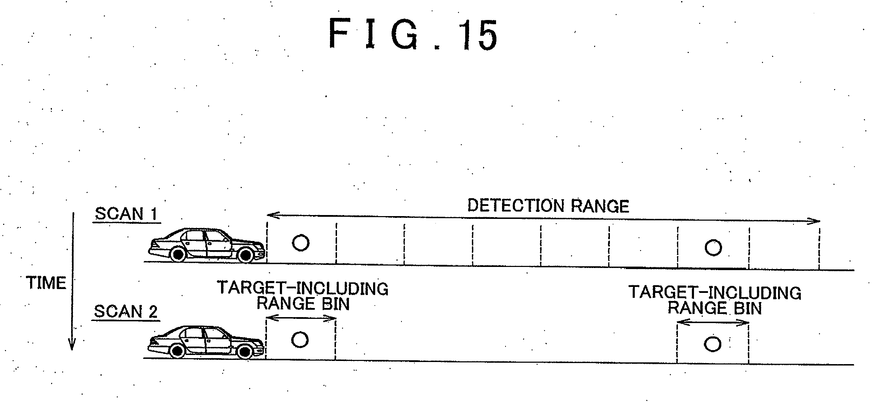

A pulse radar apparatus of this example embodiment is realized by having the control circuit 80 in the structure of the pulse radar apparatus 20 shown in FIG. 1 execute the routine shown in FIG. 14. Hereinafter, the characteristic portion of this example embodiment will be described with reference to FIGS.14 and 15. FIG. 14 is a flowchart illustrating one example of a control routine executed by the control circuit 80 in the pulse radar apparatus of this example embodiment. Also, FIG. 15 is a diagram showing a characteristic operation of the pulse radar apparatus according to this examples embodiment.

In the pulse radar apparatus of this example embodiment, the control circuit 80 first divides the entire detection range, from the vehicle to the maximum distance Dmax, into a predetermined number of range bins, and then performs target detection for each range bin in the detection range by controlling the switch of the pulse shaping portion 26 such that a transmitted pulse having pulse width W corresponding to the lengths of those range bins is emitted from the vehicle, while generating a local pulse corresponding to the positions of those range bins (step 450). Incidentally, target detection of the same range bin is usually performed based on the results of integrating the mixer outputs (i.e., based on the pulse integration results) obtained when the transmitted pulse is emitted and the received pulse is received a predetermined number of times c (such as 10 times) consecutively. Then detection is performed to detect whether there is a target-including range bin among the range bins in the detection range.

If there is no target in any of the range bins such that no target-including range bin is detected (i.e., if the determination in step 452 is no), the control circuit 80 then performs target detection for each range bin based on the pulse integration results of integrating the mixer outputs obtained when the transmitted pulse is emitted and the received pulse is received a predetermined number of times c (such as 10 times) consecutively.

If, on the other hand, there is a target in one of the range bins such that a target-including range bin is detected (i.e., if the determination in step 452 is yes), then the number of times that the pulse needs to be integrated when performing target detection is increased to d number of times (such as 100 times), which is more than the predetermined number of times c, for that target-including range bin (step 454). Then target detection is continued based on the pulse integration results of integrating the mixer outputs obtained when the transmitted pulse is emitted and the received pulse is received that d number of times consecutively for that target-including range bin.

According to this routine executed by the control circuit 80, the number of times that the pulse needs to be integrated when performing target detection is set beforehand at the start of the control to a number c that enables a target to be detected. Then if a target-including rage bin is detected, the number of times that the pulse is integrated is increased to d number of times, which is more than c number of times, for only that target-including range bin.

Increasing the number of times that the pulse is integrated improves the signal-to-noise ratio, thereby increasing the detection accuracy. Accordingly, the pulse radar apparatus of this example embodiment improves the signal-to-noise ratio in detecting the relative distance, the relative speed, and the relative angle with respect to the target throughou t the entire detection range, and thereby increases that detection accuracy.

Incidentally, in the structure of the example embodiment, the number of times that the pulse is integrated can be set beforehand to a low number prior to a target-including range bin being detected. As a result, target detection throughout the entire detection range can be performed quickly in short period of time compared with a structure in which the number of times that the pulse is integrated is set beforehand to a large number.

Incidentally, in the fourth example embodiment described above, target-including range bin detecting means of the invention is realized by the control circuit 80 detecting a target-including range bin from among all of the range bins in the entire detection range. Also, integration frequency increasing means of the invention is realized by, when a target-including range bin is detected, the control circuit 80 increasing the number of times that the pulse needs to be integrated when performing target detection for that target-including range bin.

In the fourth example embodiment described above, when a target-including range bin is detected somewhere in the detection range, the number of times that the pulse needs to be integrated when performing target detection is increased for that target-including range bin. However, the structure may also be such that, while the number of times that the pulse is integrated is being increased for that target-including range bin, target detection itself is not performed in the other range bins aside from that target-including range bin, or detection may be performed in those range bins but the number of times that the pulse is integrated may be set to the usual number c.

Incidentally, in the first to the fourth example embodiments described above, detection of the relative distance between the vehicle and the target is realized by obtaining a correlation between the received pulse and the local pulse. This detection method can also be applied to the AD converting portions 52, 54, 72, and 74 of which the calculation speed is relatively slow on the order of the pulse recurrence frequency, so target detection can be performed with a simple structure. However, the method for detecting the relative distance is not limited to this. That is, the distance may also be detected by directly obtaining the time from the transmission edge of the transmitted pulse to the receiving edge of the receiving pulse using an AD converter capable of high speed calculations.

Also, in the foregoing first to the fourth example embodiments, the relative speed between the vehicle and the target is detected using the pulse-pair method, whereby two pulses transmitted at intervals are reflected from the same distance and the phase difference between the received signals (= the received pulses) is detected. Alternatively, however, the relative speed between the vehicle and the target may be detected using a method whereby the digital received pulse is converted into a frequency component by FFT processing. This structure makes it possible to separate and detect the speed components of a plurality of targets in the same range bin.

Further, in the foregoing first to the fourth example embodiments, the angular position of a target with respect to the vehicle is detected using a phase-comparison monopulse method, whereby the phase difference between signals (= received pulses) received by two receiving antenna arranged in different positions for a single transmitted pulse is detected. However, the angular position of a target with respect to the vehicle may also be detected using a method whereby the reception strength (such as the sum or difference) of a plurality of receiving antennas are compared, or using phased array or digital beam-forming (DBF).

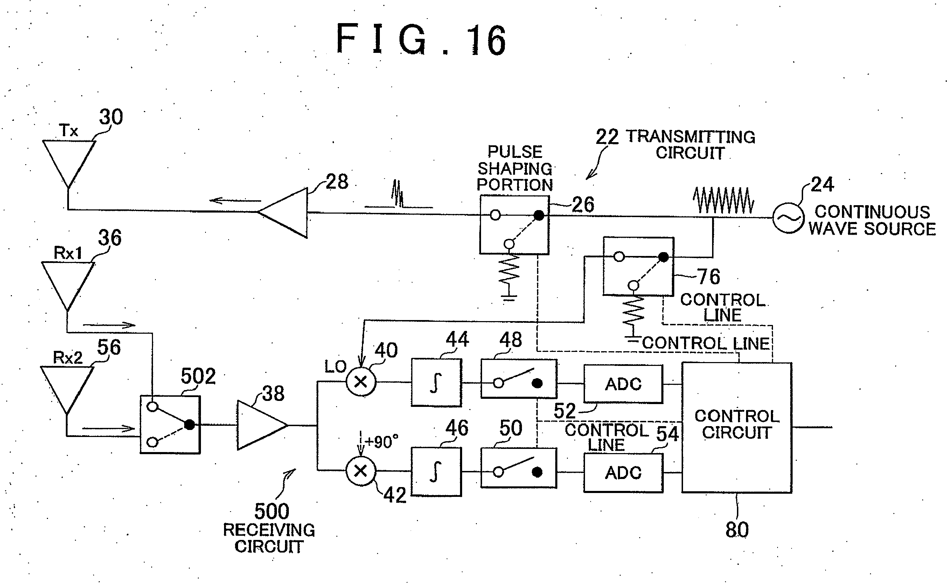

Also, in the first to the fourth example embodiments described above, one transmitting antenna 30 and two receiving antennas 36 and 56 are provided as shown in FIG. 1. Alternatively, however, a plurality of transmitting antennas may be provided. Also, when a plurality of transmitting antennas are provided, the receiving circuits 32 and 34 may be provided separately for the corresponding receiving antennas 36 and 56. That is, the receiving circuit 32 may be provided for the receiving antenna 36, and the receiving circuit 34 may be provided for the receiving antenna 56, as shown in FIG. 1. Alternatively, as shown in FIG.16, a single receiving circuit 500 (which has the same structure as the receiving circuit 32) may be provided for both receiving antennas 36 and 56, and a switch 502 may be provided for appropriately switching the receiving antenna connected to various components of the receiving circuit 500 between the receiving antennas 36 and 56. This modified example enables a single receiving circuit to be shared by two receiving antennas 36 and 56, thereby simplifying the structure of the pulse radar apparatus.

Also, when a plurality of receiving antennas are provided, those receiving antennas may be formed by the receiving-only antennas 36 and 56, as shown in FIG. 16, or at least one of those receiving antennas may also serve as a transmitting antenna 600, and a switch 602 may be provided for appropriately switching the connection of that antenna 600 between the transmitting circuit 22 side and the receiving circuit 500 (which has the same structure as the receiving circuit 32) side as shown in FIG. 7. This modified example enables the transmitting antenna and the receiving antenna to be shared, thereby further simplifying the structure of the pulse radar apparatus.

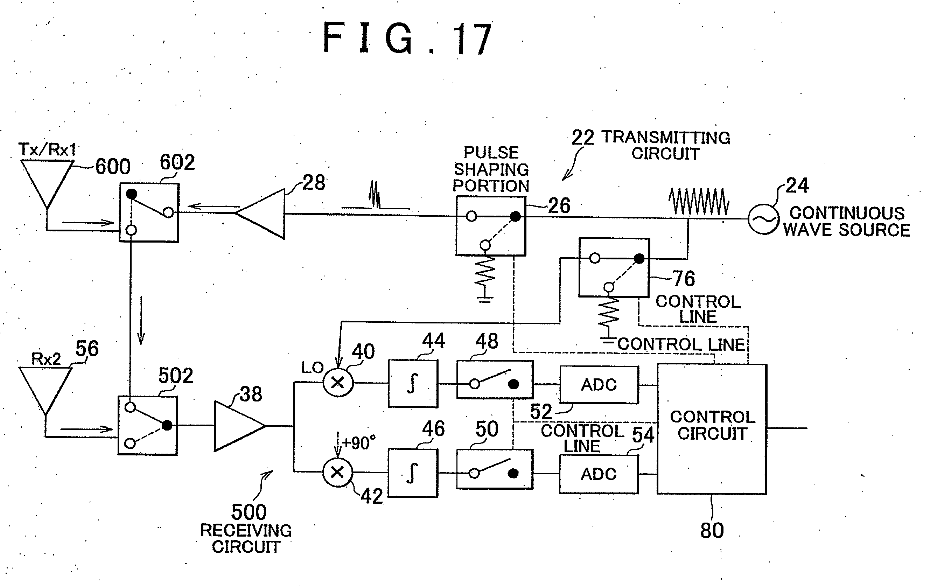

Incidentally, in the modified examples shown in FIGS.16 and 17, the switches 502 and 602 are arranged and connected upstream of the amplifier 38. Alternatively, however, the switches 502 and 602 may be arranged and connected downstream of the amplifier 38 to improve the signal-to-noise ratio.

In the first to fourth example embodiments and the modified examples shown in FIGS.16 and 17, a direct conversion method is employed for the processing of the transmitted and received signals. Alternatively, however, any down converting method such as a double conversion method may be employed.

Moreover, in the foregoing first to fourth example embodiments, and particularly in FIGS. 8, 9A to 9C, 11, 13, and 15 of those example embodiments; the detection range from the vehicle to the maximum distance Dmax is one dimensional and only a one-dimensional scan is performed during target detection. However, the invention is not limited to this. For example, the detection range may be two-dimensional, i.e., front to back and side to side, and a two-dimensional scan may be performed during target detection. Also, the detection range may be three-dimensional, i.e., front to back; side to side, and up to down, and a three-dimensional scan may be performed during target detection. In particular, a two- or three-dimensional detection range will have significantly more range bins than a one-dimensional detection range so the methods according to the second and third example embodiments described above are effective for shortening the target detection time.

This application is a divisional application of European patent application no. 08 788 931.7 (the "parent application"), also published under no. EP-A-2188647. The following items of the parent application form part of the content of this divisional application as filed.

1. A pulse radar apparatus which includes transmitting means for transmitting a pulsed wave and receiving means for receiving a reflected wave of the wave transmitted by the transmitting means, and calculates at least one of a relative distance and a relative speed with respect to an object based on a relationship between the wave transmitted by the transmitting means and the wave received by the receiving means, the pulse radar apparatus comprising:

pulse width varying means for varying a pulse width of the wave transmitted by the transmitting means according to a position of a required detection range where calculation of the at least one of the relative distance and the relative speed with respect to the object is required.

2. The pulse radar apparatus according to item 1, wherein the pulse width varying means shortens the pulse width the closer the position of the required detection range is, and lengthens the pulse width the farther away the position of the required detection range is.

3. The pulse radar apparatus according to item 1 or 2, wherein the pulse width varying means shortens the pulse width the slower the relative speed is, and lengthens the pulse width the faster the relative speed is.

4. A pulse radar apparatus which includes transmitting means for transmitting a pulsed wave and receiving means for receiving a reflected wave of the wave transmitted by the transmitting means, and calculates at least one of a relative distance and a relative speed with respect to an object based on a relationship between the wave transmitted by the transmitting means and the wave received by the receiving means, the pulse radar apparatus comprising:

object-including range bin detecting means for detecting an object-including range bin in which there is an object, from among a predetermined number of range bins into which a detection range where the at least one of the relative distance and the relative speed with respect to the object is to be calculated is divided; and pulse width shortening means for, when the object-including range bin is detected by the object-including range bin detecting means, shortening a pulse width of the wave transmitted by the transmitting means for the object-including range bin.

5. The pulse radar apparatus according to item 4, wherein the pulse width shortening means shortens the pulse width to a width that is half of the pulse width of the last transmitted wave.

6. The pulse radar apparatus according to item 4 or 5, wherein the pulse width shortening means shortens the pulse width of the wave only for the object-including range bin.

7. A pulse radar apparatus which includes transmitting means for transmitting a pulsed wave and receiving means for receiving a reflected wave of the wave transmitted by the transmitting means, and calculates at least one of a relative distance and a relative speed with respect to an object based on a relationship between the wave transmitted by the transmitting means and the wave received by the receiving means, the pulse radar apparatus comprising:

object-including range bin detecting means for detecting an object-including range bin in which there is an object, from among a plurality of range bins into which a detection range where the at least one of the relative distance and the relative speed with respect to the object is to be calculated is divided; and

calculation-requiring range bin limiting means for, when the object-including range bin is detected by the object-including range bin detecting means, limiting calculation-requiring range bins for which the at least one of the relative distance and the relative speed with respect to the object, from among all of the range bins within then detection range, is to be calculated to only the object-including range bin, a range bin around the object-including range bin, and a range bin on an edge of the detection range.

8. The pulse radar apparatus according to item 7, wherein before the object-including range bin is detected by the object-including range bin detecting means, the calculation-requiring range bin is only the range bin on the edge of the detection range.

9. The pulse radar apparatus according to item 7 or 8, wherein when the object-including range bin is detected by the object-including range bin detecting means, the object-including range bin detecting means detects whether there is an object only with respect to the calculation-requiring range bin.

10. The pulse radar apparatus according to any one of items 7 to 9, wherein when the object-including range bin is detected by the object-including range bin detecting means, the calculation-requiring range bin limiting means determines the number of additional calculation-requiring range bins according to the relative speed.

11. The pulse radar apparatus according to item 10, wherein when an object is approaching the pulse radar apparatus, the detected object-including range bin and at least one range bin, the number depending on the relative speed, the number increasing as the relative speed increases, which is adjacent to the detected object-including range bin, on the side of the detected object-including range bin that is closer to the pulse radar apparatus, are set as the calculation-required range bins, and when an object is moving farther away from the pulse radar apparatus, the detected object-including range bin and at least one range bin, the number depending on the relative speed, the number increasing as the relative speed increases, which is adjacent to the detected object-including range bin, on the side of the detected object-including range bin that is farther away from the pulse radar apparatus, are set as the calculation-requiring range bins.

12. A pulse radar apparatus which includes transmitting means for transmitting a pulsed wave and receiving means for receiving a reflected wave of the wave transmitted by the transmitting means, and calculates at least one of a relative distance and a relative speed with respect to an object based on a relationship between the wave transmitted by the transmitting means and the wave received by the receiving means, the pulse radar apparatus comprising:

object-including range bin detecting means for detecting an object-including range bin in which there is an object, from among a plurality of range bins into which a detection range where at least.one of a relative distance and a relative speed with respect to the object is to be calculated is divided; and

integration frequency increasing means for, when the object-including range bin is detected by the object-including range bin detecting means, increasing the number of times that the received wave is integrated, in order to calculate the at least one of the relative distance and the relative speed with respect to the object for the object-including range bin.

13. A pulse radar apparatus comprising:

a transmitting device that transmits a pulsed wave;
a receiving device that receives a reflected wave of the wave transmitted by the transmitting device;
a calculating device that calculates at least one of a relative distance and a relative speed with respect to an object based on a relationship between the wave transmitted by the transmitting device and the wave received by the receiving device; and
a pulse width varying device which varies a pulse width of the wave transmitted by the transmitting device according to a position of a required detection range where calculation of the at least one of the relative distance and the relative speed with respect to the object is required.

14. A pulse radar apparatus comprising:

a transmitting device that transmits a pulsed wave;
a receiving device that receives a reflected wave of the wave transmitted by the transmitting device;
a calculating device that calculates at least one of a relative distance and a relative speed with respect to an object based on a relationship between the wave transmitted by the transmitting device and the wave received by the receiving device;
an object-including range bin detecting device which detects an object-including range bin in which there is an object, from among a predetermined number of range bins into which a detection range where the at least one of the relative distance and the relative speed with respect to the object is to be calculated is divided; and
a pulse width shortening device which, when the object-including range bin is detected by the object-including range bin detecting device, shortens a pulse width of the wave transmitted by the transmitting device for the object-including range bin.

15. A pulse radar apparatus comprising:

a transmitting device that transmits a pulsed wave;
a receiving device that receives a reflected wave of the wave transmitted by the transmitting device;
a calculating device that calculates at least one of a relative distance and a relative speed with respect to an object based on a relationship between the wave transmitted by the transmitting device and the wave received by the receiving device;
an object-including range bin detecting device which detects an object-including range bin in which there is an object, from among a plurality of range bins into which a detection range where the at least one of the relative distance and the relative speed witch respect to the object is to be calculated is divided; and
a calculation-requiring range bin limiting device which, when the object-including range bin is detected by the object-including range bin detecting device, limits calculation-requiring grange bins for which the at least one of the relative distance and the relative speed with respect to the object, from among all of the range bins within the detection range, is to be calculated to only the object-including range bin, a range bin around the object-including range bin, and a range bin on an edge of the detection range.

16. A pulse radar apparatus comprising:

a transmitting device that transmits a pulsed wave;
a receiving device that receives a reflected wave of the wave transmitted by the transmitting device;
a calculating device that calculates at least one of a relative distance and a relative speed with respect to an object based on a relationship between the wave transmitted by the transmitting device and the wave received by the receiving device
an object-including range bin detecting device which detects an object-including range bin in which there is an object, from among a plurality of range bins into which a detection range where the at least one of the relative distance and the relative speed with respect to the object is to be calculated is divided; and
an integration frequency increasing device which, when the object-including range bin is detected by the object-including range bin detecting device, increases the number of times that the received wave is integrated, in order to calculate the at least one of the relative distance and the relative speed with respect to the object for the object-including range bin.

17. A method for calculating at least one of a relative distance and a relative speed with respect to an object, comprising:

transmitting a pulsed wave;
receiving a reflected wave of the transmitted wave;
calculating the at least one of the relative distance and the relative speed with respect to the object basted on a relationship between the transmitted wave and the received wave; and
varying a pulse width of the transmitted wave according to a position of a required detection range where calculation of the at least one of the relative distance and the relative speed with respect to the object is required.

18. A method for calculating at least one of a relative distance and a relative speed with respect to an object, comprising:

transmitting a pulsed wave;
receiving a reflected wave of the transmitted wave;
calculating the at least one of the relative distance and the relative speed with respect to the object based on a relationship between the transmitted wave and the received wave;
detecting an object-including range bin in which there is an object, from among a predetermined number of range bins into which a detection range where the at least one of the relative distance and the relative speed with respect to the object is to be calculated is divided; and
shortening, when the object-including range bin is detected, a pulse width of the pulsed wave for the object-including range bin.

19. A method for calculating at least one of a relative distance and a relative speed with respect to an object, comprising:

transmitting a pulsed wave;
receiving a reflected wave of the transmitted wave;
calculating the at least one of the relative distance and the relative speed with respect to the object based on a relationship between the transmitted wave and the received wave;
detecting an object-including range bin in which there is an object, from among a plurality of range bins into which a detection range where the at least one of the relative distance and the relative speed with respect to the object is to be calculated is divided; and
limiting, when the object-including range bin is detected, calculation-requiring range bins for which the at least one of the relative distance and the relative speed with respect to the object, from among all of the range bins within the detection range, is to be calculated to only the object-including range bin, a range bin around the object-including range bin, and a range bin on an edge of the detection range.

20. A method for calculating at least one of a relative distance and a relative speed with respect to an object, comprising:

transmitting a pulsed wave;
receiving a reflected wave of the transmitted wave;
calculating the at least one of the relative distance and the relative speed with respect to the object based on a relationship between the transmitted wave and the received wave;
detecting an object-including range bin in which there is an object, from among a plurality of range bins into which a detection range where the at least one of the relative distance and the relative speed with respect to the object is to be calculated is divided; and
increasing, when the object-including range bin is detected, the number of times that the received wave is integrated, in order to calculate the at least one of the relative distance and the relative speed with respect to the object for the object-including range bin.

**Claims**

1. A pulse radar apparatus which includes
transmitting means (26, 28, 30) for transmitting a pulsed wave and
receiving means (32, 34) for receiving a reflected wave of the wave transmitted by the transmitting means, and
calculating means (80) for calculating at least one of a relative distance and a relative speed with respect to an object based on a relationship between the wave transmitted by the transmitting means and the wave received by the receiving means, the pulse radar apparatus further comprising:

object-including range bin detecting means (80) for detecting an object-including range bin in which there is an object, from among a plurality of range bins into which a detection range where at least one of a relative distance and a relative speed with respect to the object is to be calculated is divided, wherein, for each range bin, the detecting is based on integrating a first number of consecutively transmitted pulses of the pulsed wave, which are delayed corresponding to the respective range bin, with the corresponding reflected wave, and wherein the first number has a predetermined value and
integration frequency increasing means (80) for, when the object-including range bin is detected by the object-including range bin detecting means, increasing the first number for the object-including range bin.

**2.** The pulse radar apparatus according to claim 1, wherein the integration frequency increasing means is adapted to maintain the first number at the predetermined value for a range bin other than the object-including range bin.

**3.** The pulse radar apparatus according to claim 1, further comprising
object-including range bin detection prohibiting means configured to prohibit the object-including range bin detecting means (80) from detecting another object-including range bin different from the detected object-including range bin.

**4.** A method for calculating at least one of a relative distance and a relative speed with respect to an object, comprising:

transmitting a pulsed wave;
receiving a reflected wave of the transmitted wave;
calculating the at least one of the relative distance and the relative speed with respect to the object based on a relationship between the transmitted wave and the received wave;
detecting (450, 452) an object-including range bin in which there is an object, from among a plurality of range bins into which a detection range where the at least one of the relative distance and the relative speed with respect to the object is to be calculated is divided based on, for each range bin, integrating a first number of consecutively transmitted pulses of the pulsed wave, which are delayed corresponding to the respective range bin, with the corresponding reflected wave, and wherein the first number has a predetermined value; and
increasing (454), when the object-including range bin is detected, the first number for the object-including range bin.

**5.** The method according to claim 4, further comprising
maintaining the first number at the predetermined value for a range bin other than the object-including range bin.

**6.** The method according to claim 4, further comprising
prohibiting the object-including range bin detecting means (80) from detecting another object-including range bin different from the detected object-including range bin.

# FIG.1

EP 2 299 291 A1

# FIG.2A

■ : MOUNTING
LOCATIONS

# FIG.2B

DETECTION
RANGE

TRANSMITTING
AND RECEIVING
ANTENNA

# FIG.2C

PULSE WIDTH

t

# F I G . 3A

TARGET

ANTENNA
(Tx/Rx)

PULSE RADAR
APPARATUS

DISTANCE
DETECTION

# F I G . 3B

TRANSMITTED/
RECEIVED PULSE

S(t₁)   S(t₂)   S(t₃)

R₁      R₂      R₃      t

LOCAL PULSE

S(t₁')   S(t₂')   S(t₃')

OUTPUT
(FROM MIXER)

# F I G . 4A

# F I G . 4B

# F I G . 4C

# F I G . 5A

$\phi$

d

$R_{A1}$

LO

+90°

I

Q

$Z_{A1}$

$R_{A2}$

LO

+90°

I

Q

$Z_{A2}$

# F I G . 5B

$Z_{A2}$

Q

$\Delta\theta$

$Z_{A1}$

I

# FIG.6

○ : RECEIVED BY ANTENNA $R_{x1}$
● : RECEIVED BY ANTENNA $R_{x2}$

# FIG.7

# FIG.8

RANGE BINS
(LONG)

MEDIUM/
LONG DISTANCE

VEHICLE

CLOSE
DISTANCE

○ TARGET

RANGE BINS
(SHORT)

EP 2 299 291 A1

# FIG.9A

RANGE BINS
(SHORT)

RANGE BINS
(LONG)

# FIG.9B

RANGE
BINS

TARGET

# FIG.9C

OUTPUT

DISTANCE

# FIG.10

```
                    START

                     │
                     ▼           250
              ╱─────────────╲
             ╱  IS THERE     ╲    YES
            ╱ A FIRST TARGET- ╲──────────────────────┐
            ╲  INCLUDING       ╱                       │
             ╲ RANGE BIN ?    ╱                        │
              ╲─────────────╱                          │
                     │                                 ▼           254
                    NO                       ┌──────────────────────┐
                     │                       │  TARGET DETECTION     │
                     ▼                       │  WITH PULSE WIDTH     │
        ┌──────────────────────┐            │  OF W1/2 FOR FIRST    │
        │ TARGET DETECTION WITH │  252       │  TARGET-INCLUDING     │
        │  PULSE WIDTH OF W1    │            │  RANGE BIN            │
        └──────────────────────┘            └──────────────────────┘
                     │                                 │
                     │                                 ▼           256
                     │                       ┌──────────────────────┐
                     │                       │  TARGET DETECTION     │
                     │                       │  WITH PULSE WIDTH     │
                     │                       │ OF W1/4 FOR SECOND    │
                     │                       │  TARGET-INCLUDING     │
                     │                       │  RANGE BIN            │
                     │                       └──────────────────────┘
                     │                                 ┆
                     │                                 ▼           258
                     │                       ┌──────────────────────┐
                     │                       │  TARGET DETECTION     │
                     │                       │  WITH PULSE WIDTH     │
                     │                       │ OF DESIRED LENGTH     │
                     │                       │ OF W1/2n FOR nTH      │
                     │                       │  TARGET-INCLUDING     │
                     │                       │  RANGE BIN            │
                     │                       └──────────────────────┘
                     │                                 │
                     ◄─────────────────────────────────┘
                     ▼
                    END
```

Target detection blocks:

- Block 254: TARGET DETECTION WITH PULSE WIDTH OF $W1/2$ FOR FIRST TARGET-INCLUDING RANGE BIN
- Block 256: TARGET DETECTION WITH PULSE WIDTH OF $W1/4$ FOR SECOND TARGET-INCLUDING RANGE BIN
- Block 258: TARGET DETECTION WITH PULSE WIDTH OF DESIRED LENGTH OF $W1/2n$ FOR nTH TARGET-INCLUDING RANGE BIN

# FIG.11

EP 2 299 291 A1

TIME

SCAN 1

ENTIRE DETECTION RANGE

LONGEST
RANGE BIN

○ TARGET

SCAN 2

FIRST TARGET-
INCLUDING RANGE BIN

SECOND LONGEST
RANGE BIN

○

SCAN 3

SECOND TARGET-
INCLUDING RANGE BIN

○

THIRD LONGEST
RANGE BIN

SCAN (n+1)

nTH TARGET-
INCLUDING RANGE BIN

○

(n+1) LONGEST
RANGE BIN

# F I G . 12

```
        ┌─────────────┐
        │    START    │
        └─────────────┘
               │
               ▼
   ┌──────────────────────────┐
   │  TARGET DETECTION FOR    │
   │  CLOSEST AND FARTHEST    │ ~350
   │ RANGE BINS IN THE ENTIRE │
   │     DETECTION RANGE      │
   └──────────────────────────┘
               │
               ▼
         352
       ◇─────────◇         YES
      ╱ IS THERE  ╲─────────────────┐
      ╲ A TARGET? ╱                 │
       ◇─────────◇              354  │
            │ NO                     ▼
            │            ┌────────────────────────┐
            │            │  TARGET DETECTION FOR   │
            │            │  CLOSEST AND FARTHEST   │
            │            │  RANGE BINS, TARGET-    │
            │            │  INCLUDING RANGE BIN,   │
            │            │ AND RANGE BINS IN FRONT │
            │            │ AND IN BACK OF TARGET-  │
            │            │  INCLUDING RANGE BIN    │
            │            └────────────────────────┘
            ▼
     ┌─────────────┐
     │     END     │
     └─────────────┘
```

# F I G . 13

ENTIRE DETECTION RANGE

SCAN 1

CALCULATION-
REQUIRED
RANGE BIN

CALCULATION-
REQUIRED
RANGE BIN

TIME

SCAN 2

CALCULATION-
REQUIRED
RANGE BIN

SCAN k

CALCULATION-
REQUIRED
RANGE BIN

EP 2 299 291 A1

# F I G . 14

```
        ┌─────────────┐
        │    START    │
        └──────┬──────┘
               │
               ▼
   ┌───────────────────────┐
   │  INTEGRATE PULSES c    │
   │   NUMBER OF TIMES      │        450
   │    AND PERFORM         │
   │  TARGET DETECTION      │
   │ FOR EACH RANGE BIN     │
   └───────────┬───────────┘
               │
               ▼          452
          ╱─────────╲          YES
         ╱ IS THERE  ╲──────────────────┐
         ╲ A TARGET? ╱                   │
          ╲─────────╱                    │
               │ NO                       │      454
               │                          ▼
               │           ┌──────────────────────────────┐
               │           │   INCREASE NUMBER OF          │
               │           │ PULSE INTEGRATIONS TO d,      │
               │           │   INTEGRATE PULSES,           │
               │           │  AND PERFORM TARGET           │
               │           │ DETECTION FOR TARGET-         │
               │           │ INCLUDING RANGE BIN           │
               │           └───────────────┬──────────────┘
               │                           │
               │◄──────────────────────────┘
               ▼
        ┌─────────────┐
        │     END     │
        └─────────────┘
```

# FIG.15

SCAN 1

DETECTION RANGE

TIME

TARGET-INCLUDING
RANGE BIN

TARGET-INCLUDING
RANGE BIN

SCAN 2

EP 2 299 291 A1

# F I G . 16

EP 2 299 291 A1

# FIG.17

EP 2 299 291 A1

Europäisches
Patentamt
European
Patent Office
Office européen
des brevets

# EUROPEAN SEARCH REPORT

**Application Number**

EP 10 16 3929

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 681 583 A (MA COM INC [US]) 19 July 2006 (2006-07-19) * paragraphs [0001] - [0003], [0006] - [0008], [0018], [0022] - [0024], [0051] - [0053] * | 1-6 | INV. G01S13/10 G01S13/18 G01S13/58 G01S13/93 |
| A | US 6 407 696 B1 (NEBEN SEAN ERNEST [US] ET AL) 18 June 2002 (2002-06-18) * column 1, lines 30-35 * * column 3, lines 6-14 * * column 4, line 1 - column 5, line 23; figures 2-4 * | 1,4 | |

TECHNICAL FIELDS
SEARCHED      (IPC)

G01S

The present search report has been drawn up for all claims

| Place of search | Date of completion of the search | Examiner |
|---|---|---|
| Munich | 11 February 2011 | Schmelz, Christian |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

.......................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 10 16 3929

This annex lists the patent family members relating to the patent documents cited in the above-mentioned European search report.
The members are as contained in the European Patent Office EDP file on
The European Patent Office is in no way liable for these particulars which are merely given for the purpose of information.

11-02-2011

| Patent document cited in search report | | Publication date | Patent family member(s) | | Publication date |
|---|---|---|---|---|---|
| EP 1681583 | A | 19-07-2006 | CN | 1808176 A | 26-07-2006 |
| | | | JP | 2006194887 A | 27-07-2006 |
| | | | US | 2006152405 A1 | 13-07-2006 |
| US 6407696 | B1 | 18-06-2002 | NONE | | |

EPO FORM P0459

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003329764 A
- EP 08788931 A
- EP 2188647 A